(19) Europäisches Patentamt
European Patent Office
Office européen des brevets

(11) EP 0 625 711 B1

(12) **EUROPEAN PATENT SPECIFICATION**

(45) Date of publication and mention
of the grant of the patent:
**10.03.1999 Bulletin 1999/10**

(51) Int Cl.6: **G01R 31/28**, G02F 1/13

(21) Application number: **94303562.6**

(22) Date of filing: **18.05.1994**

(54) **Method and apparatus for measuring permittivities of ferroelectric liquid crystals by preparing a homeotropic cell and a planar homogeneous cell**

Verfahren und Apparat zum Messen von Permittivitäten von ferro elektrischen Flussigkristallen mit einer homeotropen Zelle und einer planaren homogenen Zelle

Méthode et appareil pour mesurer des permittivités de cristaux liquide ferro-électriques avec une cellule homeotropique et une cellule planaire homogène

(84) Designated Contracting States:
**DE GB**

(30) Priority: **20.05.1993 JP 118250/93**
**24.08.1993 JP 209379/93**

(43) Date of publication of application:
**23.11.1994 Bulletin 1994/47**

(73) Proprietor: **SHARP KABUSHIKI KAISHA**
**Osaka-shi, Osaka-fu 545-0013 (JP)**

(72) Inventor: **Itoh, Nobuyuki**
**Nara-shi, Nara-ken (JP)**

(74) Representative: **Suckling, Andrew Michael et al**
**Marks & Clerk,**
**Nash Court,**
**Oxford Business Park South**
**Oxford OX4 2RU (GB)**

(56) References cited:
- **LIQUID CRYSTALS vol. 11, no. 2, 1992, GB, pages 199 - 217 JONES ET AL. 'measurement of biaxial permittivities'**
- **MOLECULAR CRYSTALS & LIQUID CRYSTALS, vol.65, no.3&4, 1981, NEW-YORK,US pages 241 - 263 SCHADT ET AL. 'dielectric,electro-optical and phase-change properties of liquid crystal guest-host displays'**

Description

## BACKGROUND OF THE INVENTION

### 1. Field of the Invention

The present invention relates to a method and apparatus for measuring the physical properties of liquid crystals, and more particularly to a method and apparatus for measuring the physical properties of ferroelectric liquid crystals.

### 2. Description of the Prior Art

Since ferroelectric liquid crystals have the advantages of memory properties, high response speed, and a wide angle of visibility in comparison with nematic liquid crystals which are widely used currently, there have been conducted extensive researches on the material as a liquid crystal display material in the next generation.

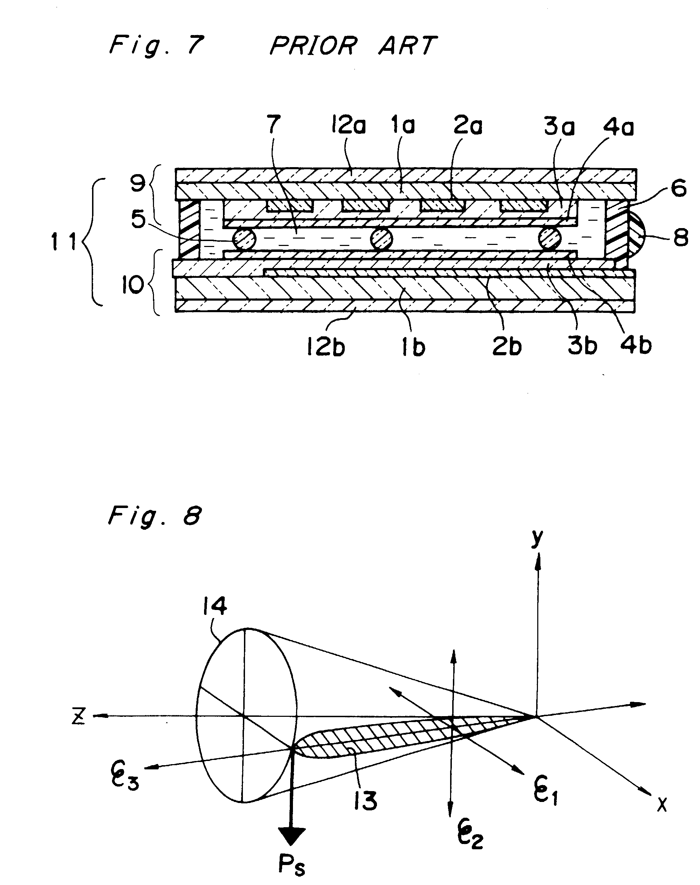

Fig. 7 shows a sectional view of an exemplified liquid crystal element (liquid crystal cell) sealing therein ferroelectric liquid crystals. The liquid crystal cell has two glass substrates a1 and 1b arranged opposite to each other. A plurality of transparent signal electrodes 2a made of indium tin oxide (referred to as "ITO" hereinafter) and so on are arranged mutually in parallel on a surface of one glass substrate 1a, and a transparent insulating film 3a made of $SiO_2$ or the like is formed on the electrodes. On a surface of the other glass substrate 1b is arranged a plurality of scanning electrodes 2b mutually in parallel in a direction perpendicular to the signal electrodes 2a, and a transparent insulating film 3b made of $SiO_2$ or the like is coated on the electrodes. On the insulating films 3a and 3b are formed respectively orientation films 4a and 4b which have undergone a uniaxial orientation process such as a rubbing process. As a material for the orientation films 4a and 4b, there is adopted an organic macromolecular film such as a polyimide film, a nylon film and a polyvinyl alcohol film, an $SiO_2$ oblique evaporation film, or the like. In normal cases, the orientation process is performed so that the liquid crystal molecules are oriented approximately in parallel with the electrode substrates. The two glass substrates 1a and 1b are adhered to each other by means of a sealing agent 6 with interposition of a spacer 5 for cell thickness control with an inlet (not shown) left in a portion. Through the inlet, ferroelectric liquid crystals (FLC) 7 is put into a space defined by the orientation films 4a and 4b, and then the inlet is sealed with a sealing agent 8. The outside surfaces of the two glass substrates 1a and 1b are respectively provided with respective polarizing plates 12a and 12b arranged so that their axes of polarization cross each other at right angles. An assembly substrate 9 is composed of the glass substrate 1a, the signal electrodes 2a, the insulating film 3a, the orientation film 4a and the polarizing plate 12a, while the other assembly substrate 10 is composed of the glass substrate 1b, the scanning electrodes 2b, the insulating film 3b, the orientation film 4b and the polarizing plate 12b.

The characteristics of the liquid crystal element having the above-mentioned construction, depends principally on the physical properties of the ferroelectric liquid crystals themselves, though it also depends on the state of orientation of the liquid crystal molecules. A theoretical corroboration for the above is given, for example, by the detailed discussions in the document of "Biaxial permittivity tensors and the effect of tilt layer arrangement in switching ferroelectric liquid crystals" by M. J. Towler et al. (Liquid Crystals, Vol. 11, No. 3, (1992) 365.). According to the above-mentioned document, the characteristics of the ferroelectric liquid crystal element are significantly dominated by the spontaneous polarization, rotational viscosity, and dielectric anisotropy thereof. Therefore, a technique for correctly measuring the properties is important in studying and developing such a ferroelectric liquid crystal element. Among the aforementioned properties, the spontaneous polarization can be easily measured by, for example, the trigonometry method ("The structure and properties of ferroelectric liquid crystals" p. 293 by Fukuda and Takezoe). A method for measuring the rotational viscosity is discussed in the document of "Measurement of rotational viscosity of ferroelectric liquid crystals on dynamic models" (Liquid Crystals, Vol. 3, No. 4, (1988) 469. by C. Escher et al.). However, in regard to the measurement of the permittivity, there is only reported a method for measuring the biaxial permittivities of several non-chiral smectic-C liquid crystals in the document of "Measurement of the biaxial permittivities for several smectic C host materials used in ferroelectric liquid crystal devices" by J. C. Jones et al. (Liquid Crystals, Vol. 11, No. 2, (1992) 199.), etc., and no report has yet been reported regarding the method for directly measuring the permittivities $\varepsilon_1$, $\varepsilon_2$, and $\varepsilon_3$ of three principal axes of chiral smectic-C liquid crystals, i.e., ferroelectric liquid crystals. The above is because the measurement is difficult. Since the ferroelectric liquid crystals are biaxial molecules, the dielectric anisotropy of the liquid crystals is not merely the difference in permittivity between the major axis and the minor axis of the molecules in contrast to the case of the nematic liquid crystals. As shown in Fig. 8, by generally defining that the component in the direction of the major axis of the liquid crystal molecules 13 is $\varepsilon_3$, the component in the direction of the spontaneous polarization Ps is $\varepsilon_2$, and the component in the other direction is $\varepsilon_1$ in regard to the permittivities in the principal axes of the ferroelectric liquid crystals, the dielectric anisotropy and the biaxial dielectric anisotropy of the ferroelectric liquid crystals are defined respectively as follows:

$$\Delta \varepsilon = \varepsilon_3 - \varepsilon_1 \qquad (1)$$

and

$$\partial \varepsilon = \varepsilon_2 - \varepsilon_1 \qquad (2)$$

In Fig. 8, the reference numeral 14 denotes the conical orbit of the movement of the ferroelectric liquid crystal molecules 13.

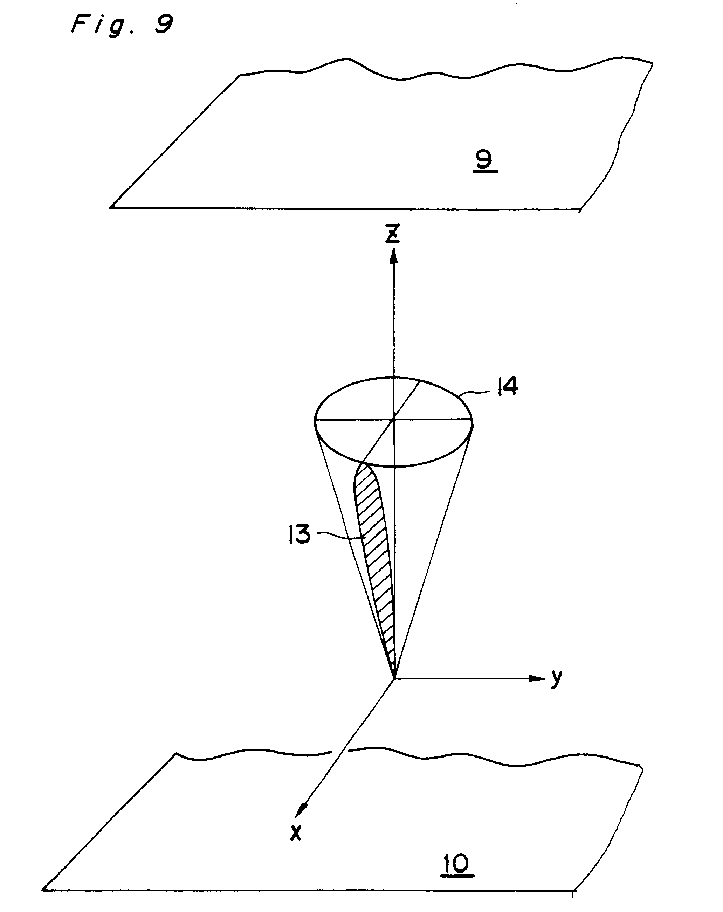

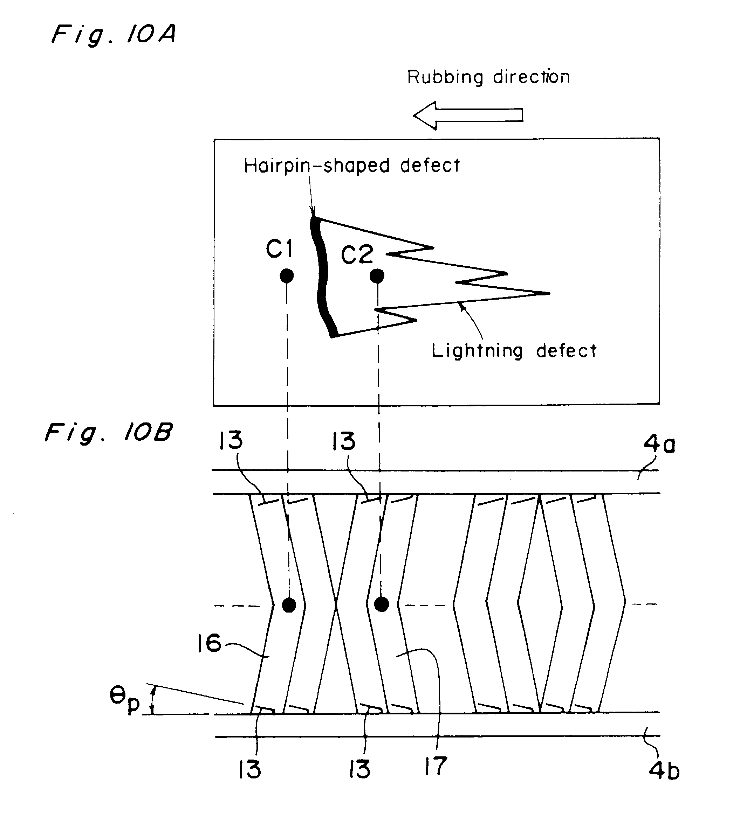

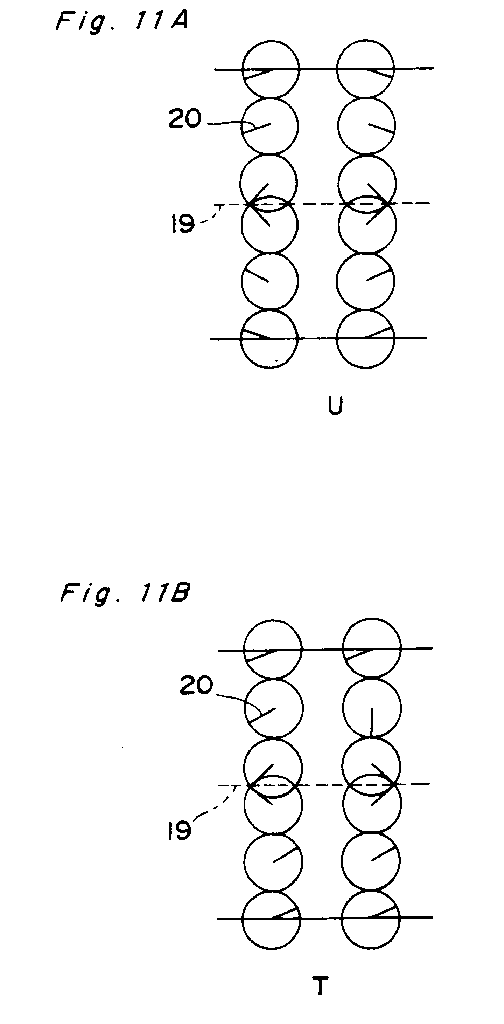

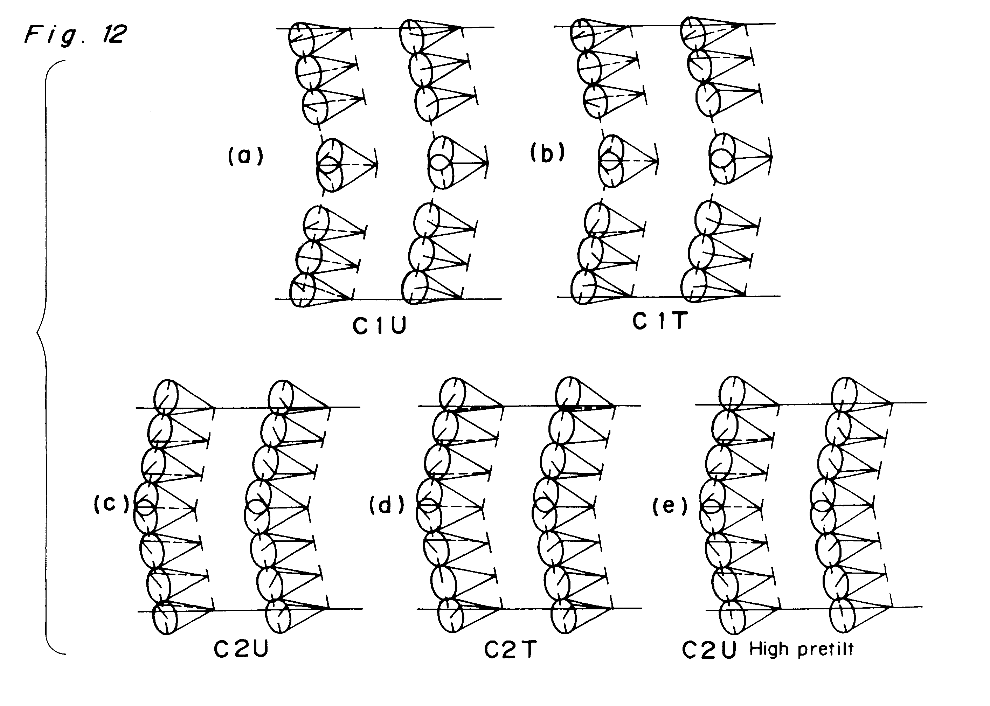

The reason why the measurement of the principal axis permittivities $\varepsilon_1$, $\varepsilon_2$, and $\varepsilon_3$ of the ferroelectric liquid crystals is difficult is because of the complicatedness of the molecular orientation and the fact that the molecules have their spontaneous polarization. For instance, as shown in Fig. 9, in a homeotropic cell in which the liquid crystal molecules 13 are aligned approximately perpendicular to the substrates 9 and 10, the smectic layer is formed in parallel with the substrates 9 and 10 without being bent. However, in normally producing a planar homogeneous cell in which the liquid crystal molecules are aligned approximately in parallel with the substrates, there is produced a structure in which the ferroelectric liquid crystal layer is bent vertically in the middle portion thereof (chevron layer structure) as shown in Fig. 10B. As shown in Fig. 10A (viewed in a direction perpendicular to the surfaces of the substrates), two regions can exist in the chevron layer structure. The two regions are named C1 and C2 in relation with a pretilt θp by Kanbe et al. (Ferroelectrics, Vol. 114, (1991) 3.). When no pretilt is existing, the above-mentioned two regions can be related with the direction of a uniaxial orientation process such as a rubbing process. Another phenomenon which causes the complicatedness of the molecular orientation is because of the orientations of Uniform (U) and Twist (T) as shown in Figs. 11A and 11B. The Uniform orientation is the orientation for shutting off light, while the Twist orientation is the orientation for not shutting off light (Japan Journal of Applied Physics (Jpn. J. Appl. Phys.), Vol. 27, (1988) 1.). In Figs. 11A and 11B, the reference numeral 19 denotes the chevron interface, while the reference numeral 20 denotes a C-director (representing the azimuth of the liquid crystal molecules). Mukaidono et al. has reported that three orientation states of CIU (CI-Uniform), CIT (CI-Twist), and one type of C2 for shutting off light have been obtained in a parallel-rubbing ferroelectric liquid crystal cell employing a high pretilt orientation film (Japan Journal of Applied Physics, Vol. 30, (1990) L1823.). Tagawa et al. has reported that four orientation states of CIU, CIT, C2U (C2-Uniform), and C2T (C2-Twist) having different optical characteristics exist in the parallel-rubbing ferroelectric liquid crystal cell as shown in Figs. 12 (a) through (d) (Proceedings Japan Display '92 Hiroshima, 1992, p. 519.). The one type of C2 employing the high pretilt orientation film can be distinguished as the high pretilt C2U as shown in Fig. 12 (e). The above-mentioned molecular orientations are discussed in detail in Japan Journal of Applied Physics, Vol. 31, (1992), 852. and Vol. 31 (1992), L1089, in which the change, etc. of the liquid crystal molecules inside the cell are mentioned. As described above, the ferroelectric liquid crystals are not simply oriented in parallel with the substrates even when a horizontal orientation is tried, and moreover a lot of orientation states exist. For the above reasons, it has been conventionally impossible to correctly derive the principal axis permittivities $\varepsilon_1$, $\varepsilon_2$, and $\varepsilon_3$. In other words, since the liquid crystal cell has been conventionally treated merely as a planar homogeneous cell of one type in disregard of the multiformity of the molecular orientation, the obtained values of the principal axis permittivities have differed greatly depending on each cell to fail in obtaining the correct values.

## SUMMARY OF THE INVENTION

The object of the present invention is therefore to provide a method and apparatus for correctly measuring the permittivities $\varepsilon_1$, $\varepsilon_2$, and $\varepsilon_3$ of the three principal axes of ferroelectric liquid crystals.

In order to achieve the aforementioned object, there is provided a method for measuring permittivities of a ferroelectric liquid crystal, the method comprising the step of preparing a homeotropic cell in which a smectic layer composed of the ferroelectric liquid crystal is arranged in parallel with the substrates, and a planar homogeneous cell having a chevron layer structure in which the smectic layer composed of the ferroelectric liquid crystal is bent in the middle portions thereof with respect to the substrates; characterized in that, with ferroelectric liquid crystal sealedly filled in a gap between a pair of substrates which are arranged opposite to each other and provided with electrodes on surfaces of the substrates facing each other, a permittivity is measured by applying across the electrodes a high-frequency probe voltage having a level at which an orientation of a liquid crystal molecule does not change to obtain a principal axis permittivity $\varepsilon_3$ in a direction of a major axis of the liquid crystal molecules of the ferroelectric liquid crystal, a principal axis permittivity $\varepsilon_2$ in a direction of spontaneous polarization of the liquid crystal molecules, and a principal axis permittivity $\varepsilon_1$ in a direction perpendicular to the directions of the major axis and the spontaneous polarization based on the permittivity; and in that it further comprises

applying the probe voltage across the electrodes of the homeotropic cell to measure a permittivity $\varepsilon h$ of the ferroelectric liquid crystal;

applying the probe voltage across the electrodes of the planar homogeneous cell to measure a permittivity $\varepsilon p$ of the ferroelectric liquid crystal;

applying the probe voltage across the electrodes of the planar homogeneous cell to measure a permittivity $\varepsilon p_{DC}$ of the ferroelectric liquid crystal with a direct current bias voltage or a low-frequency bias voltage applied across the electrodes of the planar homogeneous cell to thereby align the spontaneous polarization of the liquid crystal molecules in a specified direction in the smectic layer; and

obtaining the principal axis permittivities $\varepsilon_1$, $\varepsilon_2$, and $\varepsilon_3$ based on the three permittivities $\varepsilon h$, $\varepsilon p$, and $\varepsilon p_{DC}$ according to a specified relational expression.

Then, assuming that a dielectric anisotropy $\Delta\varepsilon$ and a biaxial dielectric anisotropy $\partial\varepsilon$ of the ferroelectric liquid crystal are expressed respectively by the following equations:

$$\Delta\varepsilon = \varepsilon_3 - \varepsilon_1 \tag{1}$$

*and*

$$\partial\varepsilon = \varepsilon_2 - \varepsilon_1 \tag{2}$$

and assuming that $\theta$, $\delta$, and $\Phi$ represent respectively a tilt angle of the liquid crystal molecules, an inclination angle of the smectic layer with respect to the substrates, and an azimuth of the liquid crystal molecules, the specified relational expression is expressed by the following simultaneous equations:

$$\varepsilon h = \varepsilon_1 + \Delta\varepsilon\cos^2\theta \tag{3}$$

$$\varepsilon p = d/\int_0^d [1/\varepsilon_{YY}(\Phi)]dY \tag{4}$$

(provided that d is a cell thickness)

$$\varepsilon_{YY}(\Phi) = \varepsilon_1 + \Delta\varepsilon(\sin\theta\cos\delta\sin\Phi - \cos\theta\sin\delta)^2$$
$$+ \partial\varepsilon\cos^2\delta\cos^2\Phi \tag{5}$$

*and*

$$\varepsilon p_{DC} = \varepsilon_1 + \Delta\varepsilon(\sin\theta\cos\delta\sin\Phi_{DC} - \cos\theta\sin\delta)^2$$
$$+ \partial\varepsilon\cos^2\delta\cos^2\Phi_{DC} \tag{6}$$

(provided that $\Phi_{DC}$ is a constant.)

According to the above methods, a homeotropic cell and a planar homogeneous cell each sealing therein ferroelectric liquid crystals (chiral smectic-C) to be measured are prepared. It is assumed that in the homeotropic cell the smectic layer is not bent but arranged in parallel with the substrates. Meanwhile, it is assumed that the planar homogeneous cell has a chevron layer structure in which the smectic layer is bent in the middle portions thereof with respect to the substrates as shown in Fig. 10. The permittivity of the entire ferroelectric liquid crystals to be measured is subjected to a coordinate transformation process and like processes, while the aforementioned homeotropic cell and planar homogeneous cell are measured of their permittivities in the direction perpendicular to the substrates. Since there are three principal axis permittivities to be obtained, three measurement systems are prepared. It is assumed that the dielectric anisotropy and the biaxial dielectric anisotropy of the ferroelectric liquid crystals are expressed respectively by the equations:

$$\Delta\varepsilon = \varepsilon_3 - \varepsilon_1 \qquad (1)$$

*and*

$$\partial\varepsilon = \varepsilon_2 - \varepsilon_1 \qquad (2)$$

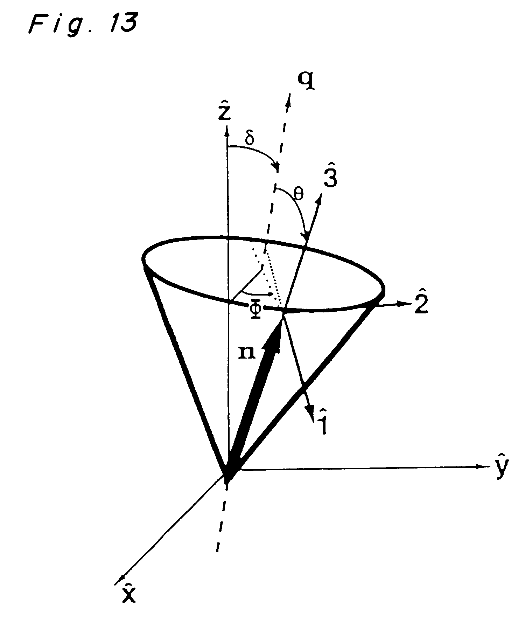

and, as shown in Fig. 13, $\theta$, $\delta$, and $\Phi$ represent respectively the tilt angle of the liquid crystal molecules, the inclination angle of the smectic layer with respect to the substrates, and the azimuth of the liquid crystal molecules in the laboratory system coordinates x, y, and z in the same manner as in the normal case (in Fig. 13, $q$ is the axis of the cone, and $n$ is the unit vector of the liquid crystal molecules in the direction of the major axis).

(1) First, the permittivity $\varepsilon h$ of the homeotropic cell is measured. The permittivity $\varepsilon h$ of the cell can be expressed by the following equation (3):

$$\varepsilon h = \varepsilon_1 + \Delta\varepsilon\cos^2\theta \qquad (3)$$

(2) Then the permittivity of the planar homogeneous cell is measured. Although the molecular orientation of the cell is not uniform as shown in Fig. 12, the permittivity can be expressed by the following equations (4) and (5).

$$\varepsilon p = d/\int_0^d [1/\varepsilon_{YY}(\Phi)]dY \qquad (4)$$

*and*　　　(provided that d is the thickness of the cell)

$$\varepsilon_{YY}(\Phi) = \varepsilon_1 + \Delta\varepsilon(\sin\theta\cos\delta\sin\Phi - \cos\theta\sin\delta)^2$$
$$+ \partial\varepsilon\cos^2\delta\cos^2\Phi \qquad (5)$$

(3) The third measurement system can be obtained by applying a direct current (DC) bias electric field or a bias electric field having a sufficiently low frequency to the planar homogeneous cell in the direction perpendicular to the substrates to thereby align the spontaneous polarization entirely in a specified direction. In the present case, the permittivity $\varepsilon p_{DC}$ can be obtained by substituting a constant $\Phi_{DC}$ for $\Phi$ in Equation (5) in a form expressed by the following Equation (6):

$$\varepsilon p_{DC} = \varepsilon_1 + \Delta\varepsilon(\sin\theta\cos\delta\sin\Phi_{DC} - \cos\theta\sin\delta)^2$$
$$+ \partial\varepsilon\cos^2\delta\cos^2\Phi_{DC} \qquad (6)$$

(provided that $\Phi_{DC}$ is a constant.)

In a special case of the present system, there is a case in which an electric field sufficiently powerful for making the spontaneous polarization completely coincide with the direction of the electric field is applied, when the permittivity $\varepsilon p_{DC}'$ can be expressed by substituting 0 or $\pi$ (rad) for $\Phi$ in Equation (6) according to the following Equation (7):

$$\varepsilon p_{DC'} = \varepsilon_1 + \Delta\varepsilon\cos^2\theta\sin^2\delta + \partial\varepsilon\cos^2\delta \qquad (7)$$

By setting up simultaneous equations of Equations (3), (4), (5), and (6), or simultaneous equations of Equations (3), (4), (5), and (7) based on the thus obtained three values of $\varepsilon h$, $\varepsilon p$, and $\varepsilon p_{DC}$, the three principal axis permittivities $\varepsilon_1$, $\varepsilon_2$, and $\varepsilon_3$ can be correctly obtained.

Also, an average value $\Phi_0$ of the azimuth of the liquid crystal molecules in a time when no bias voltage is applied across the electrodes of the planar homogeneous cell is used as $\Phi$ in Equation (5).

According to the above method, there is used as $\Phi$ in Equation (5) an average value $\Phi_0$ of the azimuth of the liquid crystal molecules in the time when no bias voltage is applied to the above-mentioned electrode of the planar homogeneous cell. With the above-mentioned arrangement, Equation (5) is linearized and accordingly Equation (4) is linearized. As a result, Equations (3), (4), (5), and (6) are all formed into linear equations to allow the three principal axis permittivities $\varepsilon_1$, $\varepsilon_2$, and $\varepsilon_3$ to be easily obtained without executing any numerical calculation process by means of a computer or the like.

Also, there is provided a method for measuring permittivities of a ferroelectric liquid crystal, the method comprising the step of:

preparing a homeotropic cell in which a smectic layer composed of the ferroelectric liquid crystal is arranged in parallel with the substrates, and a planar homogeneous cell having a chevron layer structure in which the smectic layer composed of the ferroelectric liquid crystal is bent in the middle portions thereof with respect to the substrates;

characterized in that, with ferroelectric liquid crystal sealedly filled in a gap between a pair of substrates which are arranged opposite to each other and provided with electrodes on surfaces of the substrates facing each other, a permittivity is measured by applying across the electrodes a high-frequency probe voltage having a level at which an orientation of a liquid crystal molecule does not change to obtain a principal axis permittivity $\varepsilon_3$ in a direction of a major axis of the liquid crystal molecules of the ferroelectric liquid crystals, a principal axis permittivity $\varepsilon_2$ in a direction of spontaneous polarization of the liquid crystal molecules, and a principal axis permittivity $\varepsilon_1$ in a direction perpendicular to the directions of the major axis and the spontaneous polarization based on the permittivity; and in that it further comprises:

applying the probe voltage across the electrodes of the homeotropic cell to measure a permittivity $\varepsilon h$ of the ferroelectric liquid crystal;
applying the probe voltage across the electrodes of the planar homogeneous cell to measure a permittivity $\varepsilon p$ of the ferroelectric liquid crystal;
applying the probe voltage across the electrodes of the planar homogeneous cell to directly measure the principal axis permittivity $\varepsilon_2$ of the ferroelectric liquid crystal with a direct current bias voltage or a low-frequency bias voltage applied across the electrodes of the planar homogeneous cell to thereby align the smectic layer perpendicular to the substrates and align the spontaneous polarization of the liquid crystal molecules in the smectic layer in a direction perpendicular to the substrates; and

obtaining further the principal axis permittivities $\varepsilon_1$ and $\varepsilon_3$ based on the three permittivities $\varepsilon h$, $\varepsilon p$, and $\varepsilon_2$ according to a specified relational expression.

Then, assuming that a dielectric anisotropy $\Delta \varepsilon$ and a biaxial dielectric anisotropy $\partial \varepsilon$ of the ferroelectric liquid crystals are expressed respectively by the following equations:

$$\Delta \varepsilon = \varepsilon_3 - \varepsilon_1 \tag{1}$$

and

$$\partial \varepsilon = \varepsilon_2 - \varepsilon_1 \tag{2}$$

and assuming that $\theta$, $\delta$, and $\Phi$ represent respectively a tilt angle of the liquid crystal molecules, an inclination angle of the smectic layer with respect to the substrates, and an azimuth of the liquid crystal molecules, the specified relational expression is expressed by the following simultaneous equations:

$$\varepsilon h = \varepsilon_1 + \Delta \varepsilon \cos^2 \theta \tag{3}$$

$$\varepsilon p = d / \int_0^d [1/\varepsilon_{YY}(\Phi)] dY \tag{4}$$

*and* (provided that d is a cell thickness)

$$\varepsilon_{YY}(\Phi) = \varepsilon_1 + \Delta\varepsilon(\sin\theta\cos\delta\sin\Phi - \cos\theta\sin\delta)^2$$

$$+ \partial\varepsilon\cos^2\delta\cos^2\Phi \qquad (5).$$

According to the above methods, $\varepsilon_2$ among the three principal axis permittivities $\varepsilon_1$, $\varepsilon_2$, and $\varepsilon_3$ is firstly measured directly. Sato et al. has reported that, depending on the type of the ferroelectric liquid crystals, the smectic layer can be aligned perpendicular to the substrates by applying an appropriate alternating electric field to the planar homogeneous cell (Japan Journal of Applied Physics, Vol. 28, (1989), L483.). When the smectic layer is aligned perpendicular to the substrates, $\varepsilon_2$ can be directly measured by applying a direct current bias electric field or a bias electric field having a sufficiently low frequency to align the spontaneous polarization entirely in the direction of the electric field. By setting up simultaneous equations of Equations (3), (4), and (5) based on the thus measured $\varepsilon_2$, εh measured in the aforementioned step (1), and εp measured in the aforementioned step (2), the three principal axis permittivities $\varepsilon_1$, $\varepsilon_2$, and $\varepsilon_3$ can be correctly obtained. The present invention also provides an apparatus for measuring permittivities of a ferroelectric liquid crystal as defined in Claim 6 or Claim 7. Preferred features of the apparatus are set out in Claims 8 and 9.

Thus, with regard to an apparatus for executing a method for measuring permittivities of ferroelectric liquid crystal wherein, with ferroelectric liquid crystal sealedly filled in a gap between a pair of substrates which are arranged opposite to each other and provided with electrodes on surfaces of the substrates facing each other, a permittivity is measured by applying across the electrodes a high-frequency probe voltage having a level at which an orientation of liquid crystal molecule does not change to obtain a principal axis permittivity $\varepsilon_3$ in a direction of a major axis of the liquid crystal molecules of the ferroelectric liquid crystal, a principal axis permittivity $\varepsilon_2$ in a direction of spontaneous polarization of the liquid crystal molecules, and a principal axis permittivity $\varepsilon_1$ in a direction perpendicular to the directions of the major axis and the spontaneous polarization based on the permittivity, the method comprising the steps of:

preparing a homeotropic cell in which a smectic layer composed of the ferroelectric liquid crystal is arranged in parallel with the substrates, and a planar homogeneous cell having a chevron layer structure in which the smectic layer composed of the ferroelectric liquid crystal is bent in the middle portions thereof with respect to the substrates;
applying the probe voltage across the electrodes of the homeotropic cell to measure a permittivity εh of the ferroelectric liquid crystal;
applying the probe voltage across the electrodes of the planar homogeneous cell to measure a permittivity εp of the ferroelectric liquid crystal;
applying the probe voltage across the electrodes of the planar homogeneous cell to measure a permittivity εp$_{DC}$ of the ferroelectric liquid crystal with a direct current bias voltage or a low-frequency bias voltage applied across the electrodes of the planar homogeneous cell to thereby align the spontaneous polarization of the liquid crystal molecules in a specified direction in the smectic layer; and
obtaining the principal axis permittivities $\varepsilon_1$, $\varepsilon_2$, and $\varepsilon_3$ based on the three permittivities εh, εp, and εp$_{DC}$ according to a specified relational expression; wherein
assuming that a dielectric anisotropy $\Delta\varepsilon$ and a biaxial dielectric anisotropy $\partial\varepsilon$ of the ferroelectric liquid crystal are expressed respectively by the following equations:

$$\Delta\varepsilon = \varepsilon_3 - \varepsilon_1 \qquad (1)$$

*and*

$$\partial\varepsilon = \varepsilon_2 - \varepsilon_1 \qquad (2)$$

and assuming that θ, δ, and Φ represent respectively a tilt angle of the liquid crystal molecules, an inclination angle of the smectic layer with respect to the substrates, and an azimuth of the liquid crystal molecules, the specified relational expression is expressed by the following simultaneous equations:

$$\varepsilon h = \varepsilon_1 + \Delta\varepsilon\cos^2\theta \qquad (3)$$

$$\varepsilon p = d / \int_0^d [1/\varepsilon_{YY}(\Phi)] dY \tag{4}$$

(provided that d is a cell thickness)

$$\varepsilon_{YY}(\Phi) = \varepsilon_1 + \Delta\varepsilon(\sin\theta\cos\delta\sin\Phi - \cos\theta\sin\delta)^2$$

$$+ \partial\varepsilon\cos^2\delta\cos^2\Phi \tag{5}$$

and

$$\varepsilon p_{DC} = \varepsilon_1 + \Delta\varepsilon(\sin\theta\cos\delta\sin\Phi_{DC} - \cos\theta\sin\delta)^2$$

$$+ \partial\varepsilon\cos^2\delta\cos^2\Phi_{DC} \tag{6}$$

(provided that $\Phi_{DC}$ is a constant),
the apparatus comprises:
processing means for automatically executing a numerical calculation for obtaining the three principal axis permittivities $\varepsilon_1$, $\varepsilon_2$, and $\varepsilon_3$ by setting up simultaneous equations of Equations (3), (4), (5), and (6) based on the three values of $\varepsilon h$, $\varepsilon p$, and $\varepsilon p_{DC}$.

According to the above apparatus, by setting up simultaneous equations of Equations (3), (4), (5), and (6), or simultaneous equations of Equations (3), (4), (5), and (7) based on the aforementioned three values of $\varepsilon h$, $\varepsilon p$, and $\varepsilon p_{DC}$, a numerical calculation of the three principal axis permittivities $\varepsilon_1$, $\varepsilon_2$, and $\varepsilon_3$ is automatically executed by the processing means. Therefore, the three principal axis permittivities $\varepsilon_1$, $\varepsilon_2$, and $\varepsilon_3$ can be obtained in a short time.

Alternatively, with regard to an apparatus for executing a method for measuring permittivities of ferroelectric liquid crystal wherein, with ferroelectric liquid crystal sealedly filled in a gap between a pair of substrates which are arranged opposite to each other and provided with electrodes on surfaces of the substrates facing each other, a permittivity is measured by applying across the electrodes a high-frequency probe voltage having a level at which an orientation of a liquid crystal molecule does not change to obtain a principal axis permittivity $\varepsilon_3$ in a direction of a major axis of the liquid crystal molecules of the ferroelectric liquid crystal, a principal axis permittivity $\varepsilon_2$ in a direction of spontaneous polarization of the liquid crystal molecules, and a principal axis permittivity $\varepsilon_1$ in a direction perpendicular to the directions of the major axis and the spontaneous polarization based on the permittivity, the method comprising the steps of:

preparing a homeotropic cell in which a smectic layer composed of the ferroelectric liquid crystal is arranged in parallel with the substrates, and a planar homogeneous cell having a chevron layer structure in which the smectic layer composed of the ferroelectric liquid crystal is bent in the middle portions thereof with respect to the substrates;
applying the probe voltage across the electrodes of the homeotropic cell to measure a permittivity $\varepsilon h$ of the ferroelectric liquid crystal;
applying the probe voltage across the electrodes of the planar homogeneous cell to measure a permittivity $\varepsilon p$ of the ferroelectric liquid crystal;
applying the probe voltage across the electrodes of the planar homogeneous cell to directly measure the principal axis permittivity $\varepsilon_2$ of the ferroelectric liquid crystals with a direct current bias voltage or a low-frequency bias voltage applied across the electrodes of the planar homogeneous cell to thereby align the smectic layer perpendicular to the substrates and align the spontaneous polarization of the liquid crystal molecules in the smectic layer in a direction perpendicular to the substrates; and
obtaining further the principal axis permittivities $\varepsilon_1$ and $\varepsilon_3$ based on the three permittivities $\varepsilon h$, $\varepsilon p$, and $\varepsilon_2$ according to a specified relational expression; wherein
assuming that a dielectric anisotropy $\Delta\varepsilon$ and a biaxial dielectric anisotropy $\partial\varepsilon$ of the ferroelectric liquid crystal are expressed respectively by the following equations:

$$\Delta\varepsilon = \varepsilon_3 - \varepsilon_1 \tag{1}$$

*and*

$$\partial\varepsilon = \varepsilon_2 - \varepsilon_1 \qquad (2)$$

and assuming that $\theta$, $\delta$, and $\Phi$ represent respectively a tilt angle of the liquid crystal molecules, an inclination angle of the smectic layer with respect to the substrates, and an azimuth of the liquid crystal molecules, the specified relational expression is expressed by the following simultaneous equations:

$$\varepsilon h = \varepsilon_1 + \Delta\varepsilon\cos^2\theta \qquad (3)$$

$$\varepsilon p = d / \int_0^d [1/\varepsilon_{YY}(\Phi)]dY \qquad (4)$$

*and*

      (provided that d is a cell thickness)

$$\varepsilon_{YY}(\Phi) = \varepsilon_1 + \Delta\varepsilon(\sin\theta\cos\delta\sin\Phi - \cos\theta\sin\delta)^2$$
$$+ \delta\varepsilon\cos^2\delta\cos^2\Phi \qquad (5),$$

the apparatus comprises:

processing means for automatically executing a numerical calculation for obtaining the principal axis permittivities $\varepsilon_1$ and $\varepsilon_3$ by setting up simultaneous equations of Equations (3), (4), and (5) based on the three values of $\varepsilon h$, $\varepsilon p$, and $\varepsilon_2$.

According to the above apparatus, by setting up simultaneous equations of Equations (3), (4), and (5) based on $\varepsilon_2$ measured by applying a direct current bias electric field or a bias electric field having a sufficiently low frequency to thereby align the spontaneous polarization entirely in the direction of the electric field with the smectic layer aligned perpendicular to the substrates, $\varepsilon h$ measured in the aforementioned step (1), and $\varepsilon p$ measured in the aforementioned step (2), a numerical calculation for obtaining the remaining $\varepsilon_1$ and $\varepsilon_3$ is automatically executed by the processing means. Therefore, the three principal axis permittivities $\varepsilon_1$, $\varepsilon_2$, and $\varepsilon_3$ can be obtained in a short time.

## BRIEF DESCRIPTION OF THE DRAWINGS

The present invention will become more fully understood from the detailed description given hereinbelow and the accompanying drawings which are given by way of illustration only, and thus are not limitative of the present invention, and wherein:

Fig. 1 is a graph showing a probe voltage dependency of the permittivity of a planar homogeneous cell;

Fig. 2 is a graph showing the permittivity of the planar homogeneous cell when a DC bias is applied to the cell;

Fig. 3 is a graph showing the permittivity of the planar homogeneous cell when a DC bias is applied to the cell and then removed;

Fig. 4 is a graph showing a relation between an application voltage and an apparent tilt angle obtained through measurement when a square wave of 1 Hz is applied to a planar homogeneous cell;

Fig. 5 is a graph showing a theoretical curve of a relation between an azimuth and an apparent tilt angle;

Fig. 6 is a diagram of a permittivity automatic measuring apparatus in accordance with an embodiment of the present invention;

Fig. 7 is a sectional view of an ordinary ferroelectric liquid crystal cell;

Fig. 8 is a graph showing the permittivities $\varepsilon_1$, $\varepsilon_2$, and $\varepsilon_3$ of the principal axes of ferroelectric liquid crystals;

Fig. 9 is a graph showing the molecular orientation of a homeotropic cell;

Figs. 10A and 10B are schematic views of a C1 orientation and a C2 orientation in a chiral smectic-C phase chevron layer structure;

Figs. 11A and 11B are schematic views of a Uniform orientation U and a Twist orientation T;

Fig. 12 is a schematic view of molecular orientation states of ferroelectric liquid crystals in a planar homogeneous cell; and

Fig. 13 is a view showing the molecular tilt angle θ, layer inclination angle δ, and molecular azimuth Φ of ferroelectric liquid crystals.

## DETAILED DESCRIPTION OF THE PREFERRED EMBODIMENTS

The following describes in detail methods and apparatus for measuring the permittivity of ferroelectric liquid crystals of the present invention based on several embodiments thereof.

Ferroelectric liquid crystals SCE-8 manufactured by Merck Ltd. is subjected to measurement of its permittivity. As shown in Fig. 8, what are to be obtained are a principal axis permittivity $\varepsilon_3$ in the direction of the major axis of liquid crystal molecules 13, a principal axis permittivity $\varepsilon_2$ in the direction of the spontaneous polarization Ps of the liquid crystal molecules 13, and a principal axis permittivity $\varepsilon_1$ in the other direction of the ferroelectric liquid crystals SCE-8. A cell to seal therein the ferroelectric liquid crystals for the measurement has the same construction as in Fig. 7, and thus reference to Fig. 7 is made in the following.

First, reference is made to a first measuring method.

(1) There was produced a homeotropic cell in which a smectic layer composed of the ferroelectric liquid crystals SCE-8 is arranged in parallel with substrates 9 and 10. Then, orientation films 4a and 4b are each polyimide orientation film JALS-204 manufactured by Japan Synthetic Rubber Co. The orientation film JALS-204 is made of a vertical orientation agent.

By means of an LCR meter 4284A manufactured by Hewlett Packard Corp., a probe voltage was applied across the electrodes 2a and 2b of the cell at a frequency of 100 kHz to measure the electrostatic capacitance of the homeotropic cell to consequently obtain a permittivity εh of the ferroelectric liquid crystals SCE-8 by comparison with the electrostatic capacitance of an empty cell measured preliminarily. The measurement result was εh = 3.14.

(2) Then there was produced a planar homogeneous cell (a parallel rubbing cell) having a chevron layer structure in which a smectic layer composed of the ferroelectric liquid crystals SCE-8 is bent in the middle portions thereof with respect to the substrates 9 and 10.

In the above case, the orientation films 4a and 4b were polyimide orientation film PSI-A-2101 manufactured by Chisso Ltd. The cell exhibited a uniform C2U orientation throughout its entire area. The tilt angle θ and the inclination angle δ of a smectic layer with respect to the substrates 9 and 10 of the liquid crystal molecules of the ferroelectric liquid crystals SCE-8 poured in between the substrates were each measured by a method for detecting transmitted light by means of a photodiode and a small angle scattering method by means of an X-ray with application of a square wave of ±10 V having a frequency of 1 kHz. The tilt angle θ was 21°, and the layer inclination angle δ was 19.5°. The pretilt angle θp of the polyimide orientation film PSI-A-2101 was measured by using nematic liquid crystals E-8 (manufactured by Merck Ltd.), and it was found that the measured value was 6°. Since the pretilt angle θp is greater than the difference (2.5°) between the tilt angle θ and the layer inclination angle δ, it can be found that the orientation of the cell is the high pretilt C2U as shown in Fig. 12 (e).

By means of the LCR meter 4284A manufactured by Hewlett Packard Ltd., a probe voltage was applied across the electrodes 2a and 2b of the cell at a frequency of 100 kHz to measure the electrostatic capacitance of the planar homogeneous cell to consequently obtain a permittivity εp of the ferroelectric liquid crystals SCE-8 by comparison with the electrostatic capacitance of an empty cell measured preliminarily. The measurement result was εp = 4.67.

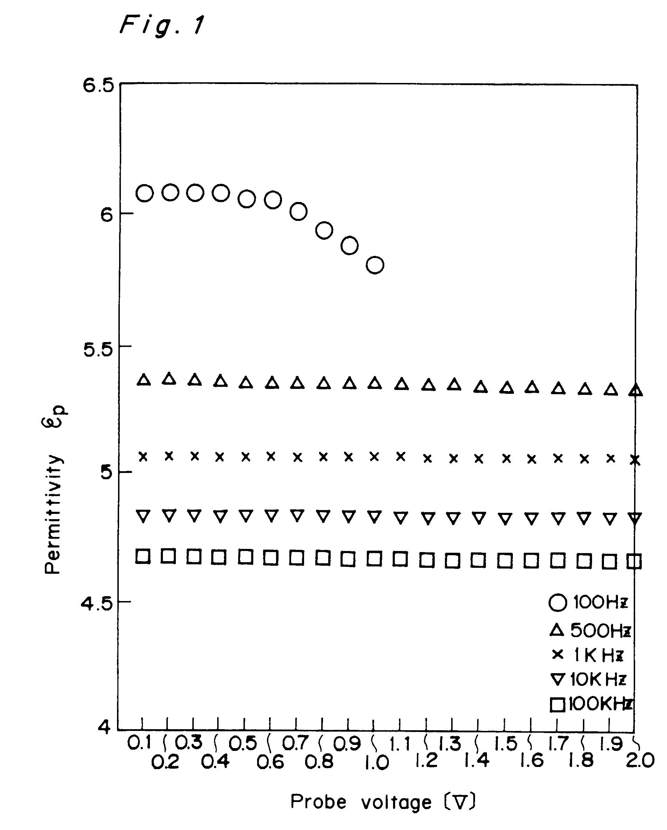

It should be noted that, in the above case, the spontaneous polarization Ps exists in the direction of the applied electric field in contrast to the case of the homeotropic cell, and therefore the orientation of the liquid crystal molecules changes due to the electric field when the probe voltage is too high. Therefore, the permittivity εp must be measured with a probe voltage having a level at which the orientation of the liquid crystal molecules does not change. For the above reason, the probe voltage was determined by observing the orientation by means of a polarizing microscope and measuring the probe voltage dependency of the permittivity εp. Fig. 1 shows the result of the measurement in the above case. It can be found that, according as the probe voltage increases, the permittivity εp varies and the orientation is changed by the electric field. It can be also found that the lower the measurement frequency is, the lower the voltage at which the orientation changes is. According to the result, the probe voltage was determined to be ±0.25 V so that reliable measurement can be performed at every frequency. Thereafter, the probe voltage used in the time of measuring the permittivity of the planar homogeneous cell was ±0.25 V in every case.

(3) Next, a probe voltage is applied to measure the permittivity $\varepsilon p_{DC}$ of the ferroelectric liquid crystals SCE-8 with a DC or low-frequency bias voltage applied across the electrodes 2a and 2b of the planar homogeneous cell produced in the step (2) to arrange the spontaneous polarization Ps of the liquid crystal molecules in a specified direction in the smectic layer. In the present case, the magnitude of the bias voltage to be applied is in question. The above is because the tilt angle δ of the smectic layer changes when the electric field due to the bias voltage is too powerful.

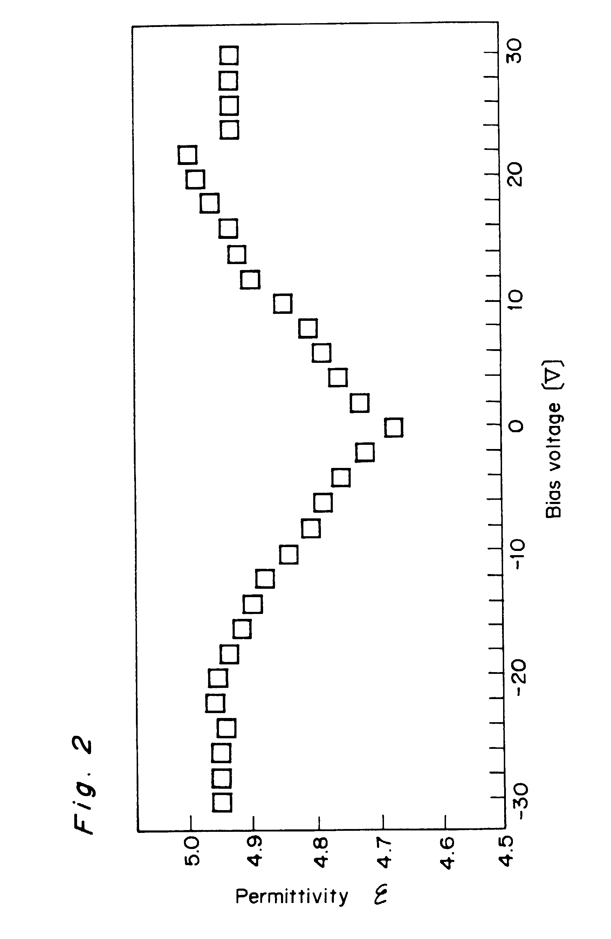

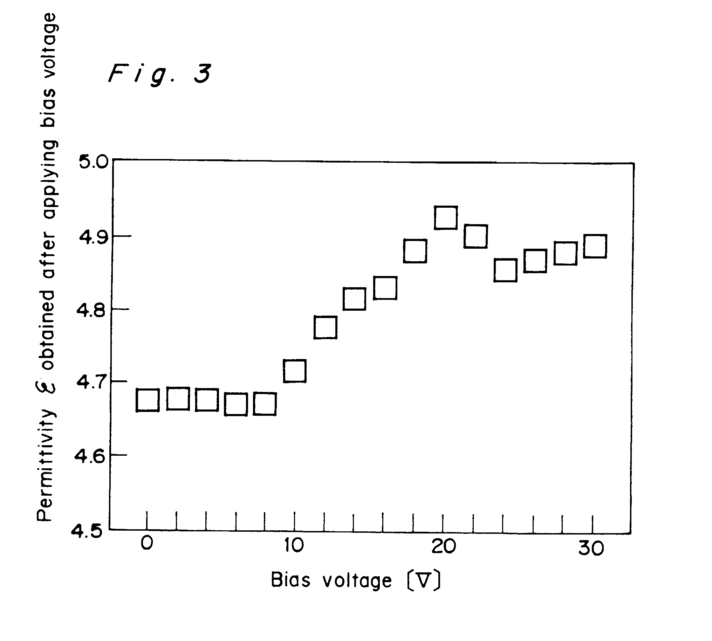

The inventor of the present invention determined the magnitude of the bias voltage in a manner as follows. Fig. 2 shows the result of measuring the permittivity ε while varying the DC bias voltage. Fig. 3 shows the result of

measuring the permittivity $\varepsilon$ with the DC bias voltages applied as varied and then removed. As is evident from Fig. 3, the permittivity $\varepsilon$ is varied in the cell to which a bias voltage of not lower than 10 V is applied, and the variance quantity of the permittivity $\varepsilon$ is saturated at a bias voltage of 30 V. The orientation of the cell after the application of the bias voltage of 30 V was the same as in the case where the smectic layer is arranged vertically as shown in Fig. 1 (b) of the aforementioned reference document of Japan Journal of Applied Physics, Vol. 28, (1989), L483. The above fact tells that the layer inclination angle $\delta$ starts to change with application of the bias voltage of 10 V, and the smectic layer is aligned perpendicular to the substrates 9 and 10 at the bias voltage of 30 V. Furthermore, as is evident from Fig. 2, the permittivity $\varepsilon$ is not saturated at the bias voltage of 10 V but increases until the bias voltage reaches 20 V. In other words, the spontaneous polarization Ps is not completely arranged in the direction of the electric field when the bias voltage is not greater than 10 V. The above fact tells that there exists no such range in which the inclination angle $\delta$ of the smetic layer does not change and the spontaneous polarization Ps is uniformly arranged in the direction of the electric field. Therefore, Equation (7) is not applicable. For the above reasons, a bias voltage lower than 10 V at which the smectic layer is not deformed, e.g., a bias voltage of 8 V is selected. Then the azimuth $\Phi_{DC}$ of the liquid crystal molecules and the permittivity $\varepsilon p_{DC}$ are obtained and Equation (6) is applied.

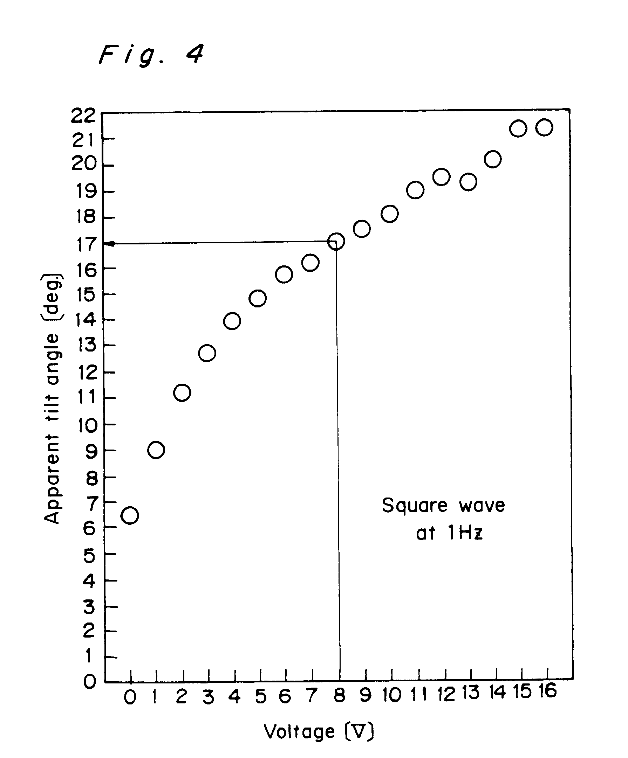

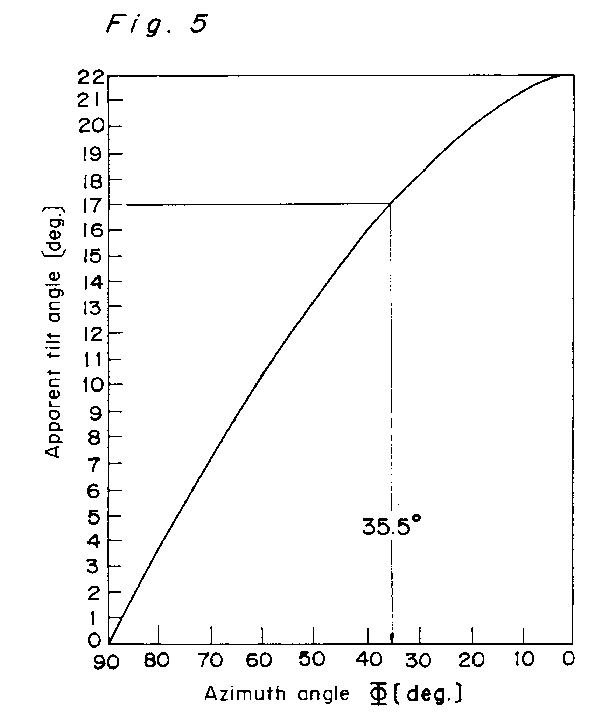

Fig. 4 shows the result of applying a square wave having a frequency of 1 Hz to the aforementioned cell while varying the voltage and measuring the apparent tilt angle in the time. According as the voltage increases, the apparent tilt angle increases. Fig. 5 shows a theoretical curve representing the result of calculating the apparent tilt angle while changing the azimuth $\Phi$ of the liquid crystal molecules. According to Fig. 4, the apparent tilt angle is 17° when the bias voltage of 8 V is applied, and according to Fig. 5, the azimuth $\Phi_{DC}$ of the molecules is 35.5° in the above time. The permittivity $\varepsilon p_{DC}$ in the above time is $\varepsilon p_{DC} = 4.81$ according to Fig. 2.

(4) Based on the three permittivities $\varepsilon h$, $\varepsilon p$, and $\varepsilon p_{DC}$ obtained in the aforementioned steps (1), (2), and (3), the principal axis permittivities $\varepsilon_1$, $\varepsilon_2$, and $\varepsilon_3$ are obtained according to Equations (3) through (6). In practice, the principal axis permittivities $\varepsilon_1$, $\varepsilon_2$, and $\varepsilon_3$ are obtained by substituting a value of 3.14 for $\varepsilon h$ in Equation (3), a value of 4.67 for $\varepsilon p$ in Equation (4), a value of 4.81 for $\varepsilon p_{DC}$ and a value of 35.5° for $\Phi_{DC}$ in Equation (6). The obtained values are shown in Table 1 below.

Table 1

| $\varepsilon h$ | $\varepsilon p$ | $\varepsilon p_{DC}$ | $\Phi_{DC}(°)$ | $\varepsilon_1$ | $\varepsilon_2$ | $\varepsilon_3$ | $\Delta\varepsilon$ | $\partial\varepsilon$ |
|---|---|---|---|---|---|---|---|---|
| 3.14 | 4.67 | 4.81 | 35.5 | 4.70 | 4.92 | 2.90 | -1.80 | 0.22 |

Next, the following describes a second measuring method. According to the present measuring method, the principal axis permittivity $\varepsilon_2$ of the ferroelectric liquid crystals is directly measured, and the principal axis permittivities $\varepsilon_1$ and $\varepsilon_3$ are obtained based on the principal axis permittivity $\varepsilon_2$ directly measured.

According to Fig. 3 described on the aforementioned step (3), it can be found that the permittivity $\varepsilon$ is saturated and the smectic layer is arranged perpendicular to the substrates after the bias voltage of 30 V is applied. According to Fig. 2, it can be found that the permittivity $\varepsilon$ is also saturated and the spontaneous polarization Ps of the liquid crystal molecules is completely aligned in the direction of the electric field in applying the bias. Therefore, when the bias voltage of 30 V is applied, the principal axis permittivity $\varepsilon_2$ can be directly measured.

In the present case, the other principal axis permittivities $\varepsilon_1$ and $\varepsilon_3$ can be obtained according to Equations (3) through (5) based on $\varepsilon h$ measured in the aforementioned step (1), $\varepsilon p$ measured in the aforementioned step (2), and $\varepsilon_2$ measured directly. The thus obtained values are shown in Table 2 below.

Table 2

| $\varepsilon h$ | $\varepsilon p$ | $\varepsilon_1$ | $\varepsilon_2$ | $\varepsilon_3$ | $\Delta\varepsilon$ | $\partial\varepsilon$ |
|---|---|---|---|---|---|---|
| 3.14 | 4.67 | 4.70 | 4.92 | 2.90 | -1.8 | 0.22 |

As is evident from the values in Table 1 and Table 2, approximately same principal axis permittivities $\varepsilon_1$, $\varepsilon_2$, and $\varepsilon_3$ of the ferroelectric liquid crystals SCE-8 were allowed to be obtained by the aforementioned two measuring methods. The above fact proves the correctness of the two measuring methods.

Next, the following describes a permittivity measuring apparatus for executing the above-mentioned two measuring methods.

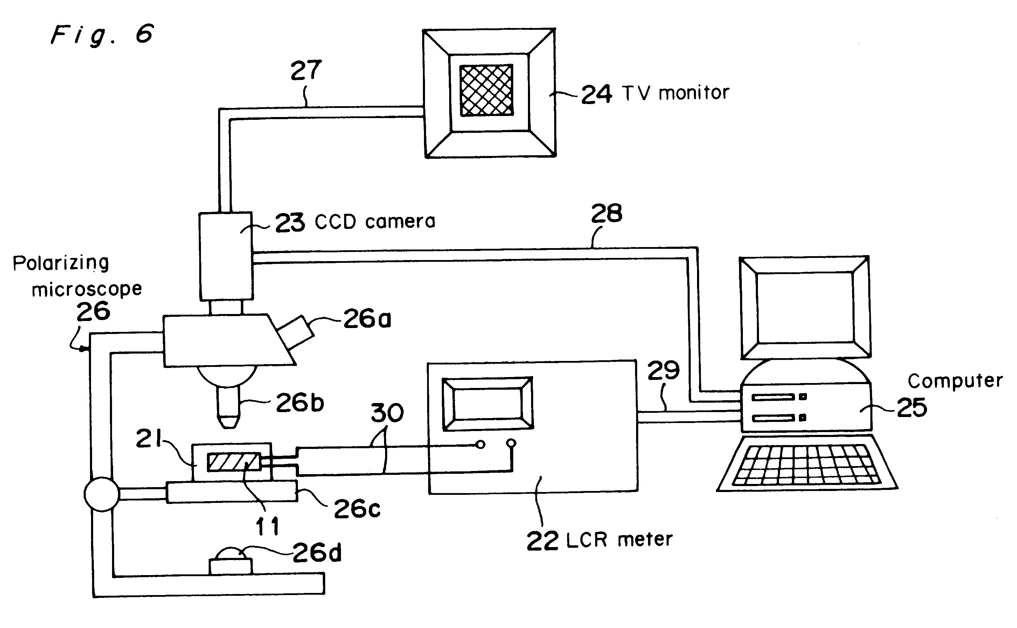

Referring to Fig. 6, the permittivity measuring apparatus is provided with a polarizing microscope 26, an LCR (inductance capacitance resistance) meter 22, a CCD (charge coupled device) camera 23 mounted to an upper portion of the polarizing microscope 26, a TV monitor 24, and a computer 25. The polarizing microscope 26 is provided with an eyepiece 26a, an objective lens 26b, a sample stage 26c, and a light source 26d. The sample stage 26c is mounted with a thermostatic chamber 21 in which a cell 11 sealing therein ferroelectric liquid crystals can be set. The electrodes of the cell 11 are connected to the LCR meter 22 via electric wires 30. The reference numerals 27, 28, and 29 denote cables. An image obtained by the polarizing microscope 26 is picked up by the CCD camera 23 to be displayed on the TV monitor 24 and taken into the computer 25. The permittivity of the cell 11 is measured by the LCR meter 22, and the measured data are also taken into the computer 25.

The computer 25 has a built-in CPU (Central Processing Unit) as a processing means. Based on the pre-stored data of tilt angle $\theta$, layer inclination angle $\delta$, and pretilt angle $\theta p$ as well as the measured permittivities, processing and calculation of the data can be automatically executed. In practice, the CPU executes numerical calculations for obtaining the three principal axis permittivities $\varepsilon_1$, $\varepsilon_2$, and $\varepsilon_3$ by setting up simultaneous equations of Equations (3), (4), (5), and (6) or simultaneous equations of Equations (3), (4), (5), and (7) based on the three values of $\varepsilon h$, $\varepsilon p$, and $\varepsilon p_{DC}$ obtained in the steps (1), (2), and (3) of the aforementioned first measuring method. Therefore, the three principal axis permittivities $\varepsilon_1$, $\varepsilon_2$, and $\varepsilon_3$ can be obtained in a short time. Otherwise, based on $\varepsilon_2$ measured directly according to the second measuring method, $\varepsilon h$ measured in the aforementioned step (1), and $\varepsilon p$ measured in the aforementioned step (2), the CPU executes numerical calculations for obtaining the other principal axis permittivities $\varepsilon_1$ and $\varepsilon_3$ by setting up simultaneous equations of Equations (3), (4), and (5). Therefore, the three principal axis permittivities $\varepsilon_1$, $\varepsilon_2$, and $\varepsilon_3$ can be obtained in a short time.

The computer 25 can execute not only the processing and numerical calculation of the aforementioned data but also determination of the probe voltage and the bias voltage required for executing the first or second measuring method based on the image obtained by the polarizing microscope 26 and the data of the permittivity. When no uniform orientation state can be obtained even if a bias voltage is applied contrary to the first and second measuring methods, the correct permittivity can be obtained through processing of the image obtained by the polarizing microscope 26 to thereby obtain the area ratio of each orientation as shown in Fig. 12.

Lastly, reference is made to a third measuring method. The third measuring method is a modification of the aforementioned first measuring method.

According to the present measuring method, an average value $\Phi_0$ of the azimuth of the liquid crystal molecules in the time when no bias voltage is applied across the electrodes of the planar homogeneous cell is used as $\Phi$ in Equation (5). In more detail, according to the first measuring method, the molecular azimuth $\Phi_{DC}$ is obtained from the apparent tilt angle when the bias voltage of 8 V is applied according to Figs. 4 and 5. According to the present measuring method, the molecular azimuth $\Phi_0$ is obtained from the apparent tilt angle when no bias voltage is applied in the same manner as above. According to Fig. 4, it can be found that the apparent tilt angle in the time when no bias voltage is applied is 6.5°, and according to Fig. 5, it can be found the molecular azimuth $\Phi_0$ corresponding to the tilt angle is 71.5°. Since no bias voltage is applied in the present case, the spontaneous polarization of the liquid crystal molecules is not aligned in a specific direction, and the liquid crystal molecules are also not aligned in a specific direction as shown in Fig. 12. However, it can be considered that the entire cell takes the azimuth $\Phi_0 = 71.5°$ in average. Therefore, $\Phi_0 = 71.5°$ is taken as $\Phi$ in Equation (5).

With the above-mentioned arrangement, Equation (5) can be linearized, and therefore Equation (4) can be linearized. Consequently, Equations (3), (4), (5), and (6) can be all made to be linear equations, for which the three principal axis permittivities $\varepsilon_1$, $\varepsilon_2$, and $\varepsilon_3$ can be obtained without executing any numerical calculation by means of a computer or the like.

In practice, by substituting the already obtained values for $\theta$, $\delta$, and $\Phi_{DC}$ in Equations (3), (5), and (6) and $\Phi_0$ = 71.5° for $\Phi$ in Equation (5), the following linearized Equations (8), (9), and (10) can be obtained (note that Equation (9) can be obtained from Equations (4) and (5), and the term $\varepsilon_3$ is eliminated in Equation (9) since it has a small coefficient).

$$0.13\varepsilon_1 + 0.87\varepsilon_3 = \varepsilon h \tag{8}$$

$$0.91\varepsilon_1 + 0.09\varepsilon_2 = \varepsilon p \tag{9}$$

$$0.40\varepsilon_1 + 0.59\varepsilon_2 + 0.01\varepsilon_3 = \varepsilon p_{DC} \tag{10}$$

By analyzing Equations (8), (9), and (10), the three principal axis permittivities $\varepsilon_1$, $\varepsilon_2$, and $\varepsilon_3$ can be simply obtained as shown in Table 3 below.

Table 3

| εh | εp | $\Phi_0(°)$ | $εp_{DC}$ | $\Phi_{DC}(°)$ | $ε_1$ | $ε_2$ | $ε_3$ | $\Delta ε$ | $\partial ε$ |
|------|------|------|------|------|------|------|------|------|------|
| 3.14 | 4.67 | 71.5 | 4.81 | 35.5 | 4.64 | 4.96 | 2.92 | -1.72 | 0.32 |

According to the results shown in Table 3, there is an error slightly greater than those of the first and second measuring methods. It seems that the error was produced due to the approximation by the average value of the molecular azimuth $\Phi_0$ in the time when no bias voltage is applied. However, in comparison with the conventional case, the error still remains small to prove the effect of the present measuring method.

As is apparent from the above description, the method for measuring the permittivities of ferroelectric liquid crystals of an embodiment has the arrangement wherein, with ferroelectric liquid crystals sealedly filled in a gap between a pair of substrates which are arranged opposite to each other and provided with electrodes on their surfaces facing each other, a permittivity is measured by applying across the electrodes a high-frequency probe voltage having a level at which an orientation of liquid crystal molecule does not change to obtain a principal axis permittivity $ε_3$ in a direction of a major axis of the liquid crystal molecules of the ferroelectric liquid crystals, a principal axis permittivity $ε_2$ in a direction of spontaneous polarization of the liquid crystal molecules, and a principal axis permittivity $ε_1$ in a direction perpendicular to the directions of the major axis and the spontaneous polarization based on the permittivity, the method comprising the steps of: preparing a homeotropic cell in which a smectic layer composed of the ferroelectric liquid crystals is aligned in parallel with the substrates, and a planar homogeneous cell having a chevron layer structure in which the smectic layer composed of the ferroelectric liquid crystals is bent in the middle portions thereof with respect to the substrates; applying the probe voltage across the electrodes of the homeotropic cell to measure a permittivity εh of the ferroelectric liquid crystals; applying the probe voltage across the electrodes of the planar homogeneous cell to measure a permittivity εp of the ferroelectric liquid crystals; applying the probe voltage across the electrodes of the planar homogeneous cell to measure a permittivity $εp_{DC}$ of the ferroelectric liquid crystals with a direct current bias voltage or a low-frequency bias voltage applied across the electrodes of the planar homogeneous cell to align the spontaneous polarization of the liquid crystal molecules in a specified direction in the smectic layer; and obtaining the principal axis permittivities $ε_1$, $ε_2$, and $ε_3$ based on the three permittivities εh, εp, and $εp_{DC}$ according to a specified relational expression. Therefore, the principal axis permittivities $ε_1$, $ε_2$, and $ε_3$ of the ferroelectric liquid crystals can be correctly obtained.

The method for measuring the permittivities of ferroelectric liquid crystals of another embodiment has further the arrangement wherein the specified relational expression is provided by simultaneous equations of Equations (3) through (6). Therefore, the principal axis permittivities $ε_1$, $ε_2$, and $ε_3$ of the ferroelectric liquid crystals can be correctly obtained.

The method for measuring the permittivity of ferroelectric liquid crystals of an embodiment has the arrangement wherein an average value $\Phi_0$ of the azimuth of the liquid crystal molecules in the time when no bias voltage is applied across the electrodes of the planar homogeneous cell is used as $\Phi$ in Equation (5). Therefore, Equation (5) can be linearized, and therefore Equation (4) can be also linearized. Consequently, Equations (3), (4), (5), and (6) can be all made to be linear equations to allow the three principal axis permittivities $ε_1$, $ε_2$, and $ε_3$ to be obtained without executing any numerical calculation by means of a computer or the like.

The method for measuring the permittivity of ferroelectric liquid crystals of an embodiment has the arrangement wherein, with ferroelectric liquid crystals sealedly filled in a gap between a pair of substrates which are arranged opposite to each other and provided with electrodes on their surfaces facing each other, a permittivity is measured by applying across the electrodes a high-frequency probe voltage having a level at which an orientation of liquid crystal molecule does not change to obtain a principal axis permittivity $ε_3$ in a direction of a major axis of the liquid crystal molecules of the ferroelectric liquid crystals, a principal axis permittivity $ε_2$ in a direction of spontaneous polarization of the liquid crystal molecules, and a principal axis permittivity $ε_1$ in a direction perpendicular to the directions of the major axis and the spontaneous polarization based on the permittivity, the method comprising the steps of: preparing a homeotropic cell in which a smectic layer composed of the ferroelectric liquid crystals is aligned in parallel with the substrates, and a planar homogeneous cell having a chevron layer structure in which the smectic layer composed of the ferroelectric liquid crystals is bent vertically in the middle portions thereof with respect to the substrates; applying the probe voltage across the electrodes of the homeotropic cell to measure a permittivity εh of the ferroelectric liquid crystals; applying the probe voltage across the electrodes of the planar homogeneous cell to measure a permittivity εp of the ferroelectric liquid crystals; applying the probe voltage across the electrodes of the planar homogeneous cell to directly measure the principal axis permittivity $ε_2$ of the ferroelectric liquid crystals with a direct current bias voltage or a low-frequency bias voltage applied across the electrodes of the planar homogeneous cell to thereby align the smectic layer perpendicular to the substrates and align the spontaneous polarization of the liquid crystal molecules in a direction perpendicular to the substrates in the smectic layer; and obtaining further the principal axis permittivities $ε_1$

and $\varepsilon_3$ based on the three permittivities $\varepsilon h$, $\varepsilon p$, and $\varepsilon_2$ according to a specified relational expression. Therefore, the principal axis permittivities $\varepsilon_1$, $\varepsilon_2$, and $\varepsilon_3$ of the ferroelectric liquid crystals can be correctly obtained.

The method for measuring the permittivity of ferroelectric liquid crystals of an embodiment has the arrangement wherein the specified relational expression is provided by simultaneous equations of Equations (3) through (5). Therefore, the principal axis permittivities $\varepsilon_1$, $\varepsilon_2$, and $\varepsilon_3$ of the ferroelectric liquid crystals can be correctly obtained.

The apparatus for measuring the permittivities of ferroelectric liquid crystals of an embodiment has the arrangement wherein, by setting up simultaneous equations of Equations (3), (4), (5), and (6) based on the aforementioned three values of $\varepsilon h$, $\varepsilon p$, and $\varepsilon p_{DC}$, the numerical calculations for obtaining the three principal axis permittivities $\varepsilon_1$, $\varepsilon_2$, and $\varepsilon_3$ are automatically executed by the processing means. Therefore, the three principal axis permittivities $\varepsilon_1$, $\varepsilon_2$, and $\varepsilon_3$ can be obtained in a short time.

The apparatus for measuring the permittivity of ferroelectric liquid crystals of an embodiment has the arrangement wherein, by setting up simultaneous equations of Equations (3), (4), and (5) based on $\varepsilon_2$ measured by applying a DC bias electric field or a bias electric field having a sufficiently low frequency to thereby align the spontaneous polarization entirely in the direction of the electric field with the smectic layer aligned perpendicular to the substrates, and based on $\varepsilon h$ and $\varepsilon p$ measured separately, the numerical calculations for obtaining the other $\varepsilon_1$ and $\varepsilon_3$ are automatically executed by the processing means. Therefore, the permittivities $\varepsilon_1$, $\varepsilon_2$, and $\varepsilon_3$ of the three principal axes can be obtained in a short time.

The invention being thus described, it will be obvious that the same may be varied in many ways.

Accordingly, the scope of the present invention is not determined by the embodiments described above but by the appended claims.

## Claims

1. A method of measuring permittivities of a ferroelectric liquid crystal, the method comprising the step of:

   preparing a homeotropic cell in which a smectic layer composed of the ferroelectric liquid crystal is arranged in parallel with the substrates (1a, 1b), and a planar homogeneous cell having a chevron layer structure in which the smectic layer composed of the ferroelectric liquid crystal is bent in the middle portions thereof with respect to the substrates (1a, 1b);

   characterized in that, with ferroelectric liquid crystal (7) sealedly filled in a gap between a pair of substrates (1a, 1b) which are arranged opposite to each other and provided with electrodes (2a, 2b) on surfaces of the substrates (1a, 1b) facing each other, a permittivity is measured by applying across the electrodes a high-frequency probe voltage having a level at which an orientation of a liquid crystal molecule does not change to obtain a principal axis permittivity $\varepsilon_3$ in a direction of a major axis of the liquid crystal molecules of the ferroelectric liquid crystal (7), a principal axis permittivity $\varepsilon_2$ in a direction of spontaneous polarization of the liquid crystal molecules, and a principal axis permittivity $\varepsilon_1$ in a direction perpendicular to the directions of the major axis and the spontaneous polarization based on the permittivity; and in that the method further comprises the steps of:

   applying the probe voltage across the electrodes (2a, 2b) of the homeotropic cell to measure a permittivity $\varepsilon_h$ of the ferroelectric liquid crystal (7);
   applying the probe voltage across the electrodes (2a, 2b) of the planar homogeneous cell to measure a permittivity $\varepsilon p$ of the ferroelectric liquid crystal (7);
   applying the probe voltage across the electrodes (2a, 2b) of the planar homogeneous cell to measure a permittivity $\varepsilon p_{DC}$ of the ferroelectric liquid crystal with a direct current bias voltage or a low-frequency bias voltage applied across the electrodes (2a, 2b) of the planar homogeneous cell to thereby align the spontaneous polarization of the liquid crystal molecules in a specified direction in the smectic layer; and
   obtaining the principal axis permittivities $\varepsilon_1$, $\varepsilon_2$, and $\varepsilon_3$ based on the three permittivities $\varepsilon h$, $\varepsilon p$, and $\varepsilon p_{DC}$ according to a specified relational expression.

2. A method of measuring permittivities of a ferroelectric liquid crystal as claimed in Claim 1, wherein, assuming that a dielectric anisotropy $\Delta\varepsilon$ and a biaxial dielectric anisotropy $\partial\varepsilon$ of the ferroelectric liquid crystal are expressed respectively by the following equations:

$$\Delta\varepsilon = \varepsilon_3 - \varepsilon_1 \qquad (1)$$

*and*

$$\partial\varepsilon = \varepsilon_2 - \varepsilon_1 \tag{2}$$

and assuming that θ, δ, and Φ represent respectively a tilt angle of the liquid crystal molecules, an inclination angle of the smectic layer with respect to the substrates (1a, 1b), and an azimuth of the liquid crystal molecules, the specified relational expression is expressed by the following simultaneous equations:

$$\varepsilon h = \varepsilon_1 + \Delta\varepsilon\cos^2\theta \tag{3}$$

$$\varepsilon p = d/\int_0^d [1/\varepsilon_{YY}(\Phi)]dY \tag{4}$$

(provided that d is a cell thickness)

$$\varepsilon_{YY}(\Phi) = \varepsilon_1 + \Delta\varepsilon(\sin\theta\cos\delta\sin\Phi - \cos\theta\sin\delta)^2$$
$$+ \delta\varepsilon\cos^2\delta\cos^2\Phi \tag{5}$$

*and*

$$\varepsilon p_{DC} = \varepsilon_1 + \Delta\varepsilon(\sin\theta\cos\delta\sin\Phi_{DC} - \cos\theta\sin\delta)^2$$
$$+ \partial\varepsilon\cos^2\delta\cos^2\Phi_{DC} \tag{6}$$

(provided that $\Phi_{DC}$ is a constant.)

3. A method of measuring permittivities of a ferroelectric liquid crystal as claimed in Claim 2, wherein

an average value $\Phi_0$ of the azimuth of the liquid crystal molecules in a time when no bias voltage is applied across the electrodes (2a, 2b) of the planar homogeneous cell is used as Φ in Equation (5).

4. A method of measuring permittivities of a ferroelectric liquid crystal, the method comprising the steps of:

preparing a homeotropic cell in which a smectic layer composed of the ferroelectric liquid crystal is arranged in parallel with the substrates (1a, 1b), and a planar homogeneous cell having a chevron layer structure in which the smectic layer composed of the ferroelectric liquid crystal (7) is bent in the middle portions thereof with respect to the substrates (1a, 1b);

characterized in that, with ferroelectric liquid crystal (7) sealedly filled in a gap between a pair of substrates (1a, 1b) which are arranged opposite to each other and provided with electrodes (2a, 2b) on surfaces of the substrates facing each other, a permittivity is measured by applying across the electrodes (2a, 2b) a high-frequency probe voltage having a level at which an orientation of a liquid crystal molecule does not change to obtain a principal axis permittivity $\varepsilon_3$ in a direction of a major axis of the liquid crystal molecules of the ferroelectric liquid crystal (7), a principal axis permittivity $\varepsilon_2$ in a direction of spontaneous polarization of the liquid crystal molecules, and a principal axis permittivity $\varepsilon_1$ in a direction perpendicular to the directions of the major axis and the spontaneous polarization based on the permittivity;
and in that it further comprises the steps of:

applying the probe voltage across the electrodes (2a, 2b) of the homeotropic cell to measure a permittivity εh of the ferroelectric liquid crystal (7);
applying the probe voltage across the electrodes (2a, 2b) of the planar homogeneous cell to measure a permittivity εp of the ferroelectric liquid crystal (7);

applying the probe voltage across the electrodes (2a, 2b) of the planar homogeneous cell to directly measure the principal axis permittivity $\varepsilon_2$ of the ferroelectric liquid crystal (7) with a direct current bias voltage or a low-frequency bias voltage applied across the electrodes of the planar homogeneous cell to thereby align the smectic layer perpendicular to the substrates (1a, 1b) and align the spontaneous polarization of the liquid crystal molecules in the smectic layer in a direction perpendicular to the substrates (1a, 1b); and

obtaining further the principal axis permittivities $\varepsilon_1$ and $\varepsilon_3$ based on the three permittivities $\varepsilon h$, $\varepsilon p$, and $\varepsilon_2$ according to a specified relational expression.

5. A method of measuring permittivities of a ferroelectric liquid crystal as claimed in Claim 4, wherein, assuming that a dielectric anisotropy $\Delta\varepsilon$ and a biaxial dielectric anisotropy $\partial\varepsilon$ of the ferroelectric liquid crystal are expressed respectively by the following equations:

$$\Delta\varepsilon = \varepsilon_3 - \varepsilon_1 \qquad (1)$$

and

$$\partial_\varepsilon = \varepsilon_2 - \varepsilon_1 \qquad (2)$$

and assuming that $\theta$, $\delta$, and $\Phi$ represent respectively a tilt angle of the liquid crystal molecules, an inclination angle of the smectic layer with respect to the substrates, and an azimuth of the liquid crystal molecules, the specified relational expression is expressed by the following simultaneous equations:

$$\varepsilon h = \varepsilon_1 + \Delta\varepsilon\cos^2\theta \qquad (3)$$

$$\varepsilon p = d/\int_0^d [1/\varepsilon_{YY}(\Phi)]dY \qquad (4)$$

and
(provided that d is a cell thickness)

$$\varepsilon_{YY}(\Phi) = \varepsilon_1 + \Delta\varepsilon(\sin\theta\cos\delta\sin\Phi - \cos\theta\sin\delta)^2$$
$$+ \partial\varepsilon\cos^2\delta\cos^2\Phi \qquad (5).$$

6. An apparatus for measuring permittivities of a ferroelectric liquid crystal comprising:

a homeotropic cell in which a smectic layer composed of the ferroelectric liquid crystal is arranged in parallel with substrates (1a, 1b); a planar homogeneous cell having a chevron layer structure in which the smectic layer composed of the ferroelectric liquid crystal is bent in the middle portions thereof with respect to the substrates (1a, 1b);
means for applying a probe voltage across electrodes (2a, 2b) of the homeotropic cell to measure a permittivity $\varepsilon h$ of the ferroelectric liquid crystal (7);
means for applying a probe voltage across electrodes (2a, 2b) of the planar homogeneous cell to measure a permittivity $\varepsilon p$ of the ferroelectric liquid crystal (7);
means for applying a probe voltage across the electrodes (2a, 2b) of the planar homogeneous cell to measure a permittivity $\varepsilon p_{DC}$ of the ferroelectric liquid crystal with a direct current bias voltage or a low-frequency bias voltage applied across the electrodes (2a, 2b) of the planar homogeneous cell to thereby align the spontaneous polarization of the liquid crystal molecules in a specified direction in the smectic layer; and
processing means (25) for obtaining the principal axis permittivities $\varepsilon_1$, $\varepsilon_2$, and $\varepsilon_3$ based on the three permittivities $\varepsilon h$, $\varepsilon p$, and $\varepsilon p_{DC}$ according to a specified relational expression.

7. An apparatus for measuring permittivities of a ferroelectric liquid crystal comprising:

a homeotropic cell in which a smectic layer composed of the ferroelectric liquid crystal is arranged in parallel with substrates (1a, 1b); a planar homogeneous cell having a chevron layer structure in which the smectic layer composed of the ferroelectric liquid crystal (7) is bent in the middle portions thereof with respect to the substrates (1a, 1b);

means for applying a probe voltage across electrodes (2a, 2b) of the homeotropic cell to measure a permittivity $\varepsilon h$ of the ferroelectric liquid crystal (7);

means for applying a probe voltage across electrodes (2a, 2b) of the planar homogeneous cell to measure a permittivity $\varepsilon p$ of the ferroelectric liquid crystal (7);

means for applying a probe voltage across the electrodes (2a, 2b) of the planar homogeneous cell to directly measure the principal axis permittivity $\varepsilon_2$ of the ferroelectric liquid crystal (7) with a direct current bias voltage or a low-frequency bias voltage applied across the electrodes of the planar homogeneous cell to thereby align the smectic layer perpendicular to the substrates (1a, 1b) and align the spontaneous polarization of the liquid crystal molecules in the smectic layer in a direction perpendicular to the substrates (1a, 1b); and

processing means (25) for obtaining further the principal axis permittivities $\varepsilon_1$ and $\varepsilon_3$ based on the three permittivities $\varepsilon h$, $\varepsilon p$, and $\varepsilon_2$ according to a specified relational expression.

8. An apparatus as claimed in Claim 6, wherein assuming that a dielectric anisotropy $\Delta\varepsilon$ and a biaxial dielectric anisotropy $\partial\varepsilon$ of the ferroelectric liquid crystal (7) are expressed respectively by the following equations:

$$\Delta\varepsilon = \varepsilon_3 - \varepsilon_1 \tag{1}$$

and

$$\partial\varepsilon = \varepsilon_2 - \varepsilon_1 \tag{2}$$

and assuming that $\theta$, $\delta$, and $\Phi$ represent respectively a tilt angle of the liquid crystal molecules, an inclination angle of the smectic layer with respect to the substrates, and an azimuth of the liquid crystal molecules, the specified relational expression is expressed by the following simultaneous equations:

$$\varepsilon h = \varepsilon_1 + \Delta\varepsilon\cos^2\theta \tag{3}$$

$$\varepsilon p = d / \int_0^d [1/\varepsilon_{YY}(\Phi)]dY \tag{4}$$

(provided that d is a cell thickness)

$$\varepsilon_{YY}(\Phi) = \varepsilon_1 + \Delta\varepsilon(\sin\theta\cos\delta\sin\Phi - \cos\theta\sin\delta)^2$$
$$+ \partial\varepsilon\cos^2\delta\cos^2\Phi \tag{5}$$

and

$$\varepsilon p_{DC} = \varepsilon_1 + \Delta\varepsilon(\sin\theta\cos\delta\sin\Phi_{DC} - \cos\theta\sin\delta)^2$$
$$+ \partial\varepsilon\cos^2\delta\cos^2\Phi_{DC} \tag{6}$$

(provided that $\Phi_{DC}$ is a constant)

the processing means (25) is adapted to execute a numerical calculation for obtaining the three principal axis permittivities $\varepsilon_1$, $\varepsilon_2$, and $\varepsilon_3$ by setting up simultaneous equations of Equations (3), (4), (5), and (6) based on the three values of $\varepsilon h$, $\varepsilon p$, and $\varepsilon p_{DC}$.

9. An apparatus as claimed in Claim 7, wherein

assuming that a dielectric anisotropy $\Delta\varepsilon$ and a biaxial dielectric anisotropy $\partial\varepsilon$ of the ferroelectric liquid crystal (7) are expressed respectively by the following equations:

$$\Delta\varepsilon = \varepsilon_3 - \varepsilon_1 \tag{1}$$

*and*

$$\partial\varepsilon = \varepsilon_2 - \varepsilon_1 \tag{2}$$

and assuming that $\theta$, $\delta$, and $\Phi$ represent respectively a tilt angle of the liquid crystal molecules, an inclination angle of the smectic layer with respect to the substrates (1a, 1b), and an azimuth of the liquid crystal molecules, the specified relational expression is expressed by the following simultaneous equations:

$$\varepsilon h = \varepsilon_1 + \Delta\varepsilon\cos^2\theta \tag{3}$$

$$\varepsilon p = d/\int_0^d [1/\varepsilon_{YY}(\Phi)]\,dY \tag{4}$$

*and*
(provided that d is a cell thickness)

$$\varepsilon_{YY}(\Phi) = \varepsilon_1 + \Delta\varepsilon(\sin\theta\cos\delta\sin\Phi - \cos\theta\sin\delta)^2$$

$$+ \partial\varepsilon\cos^2\delta\cos^2\Phi \tag{5}.$$

the processing means (25) is adapted to execute a numerical calculation for obtaining the principal axis permittivities $\varepsilon_1$ and $\varepsilon_3$ by setting up simultaneous equations of Equations (3), (4), and (5) based on the three values of $\varepsilon h$, $\varepsilon p$, and $\varepsilon_2$.

## Patentansprüche

1. Verfahren zum Messen von Dielektrizitätskonstanten eines ferroelektrischen Flüssigkristalls, das die folgenden Schritte umfasst:

   - Herstellen einer homöotropen Zelle, in der eine aus dem ferroelektrischen Flüssigkristall bestehende smektische Schicht parallel zu den Substraten (1a, 1b) angeordnet ist, und einer planaren homogenen Zelle mit einer abgewinkelten Schichtstruktur, bei der die aus dem ferroelektrischen Flüssigkristall bestehende smektische Schicht in ihren mittleren Teilen in Bezug auf die substrate (1a, 1b) umgebogen ist;

   **dadurch gekennzeichnet, dass,** während der ferroelektrische Flüssigkristall (7) abgedichtet in den zwischenraum zwischen einem Paar Substrate (1a, 1b), die einander gegenüberstehend angeordnet sind und mit Elektroden (2a, 2b) auf einander zugewandten Flächen der Substrate (1a, 1b) versehen sind, eingefüllt ist, eine Dielektrizitätskonstante dadurch gemessen wird, dass an die Elektroden eine hochfrequente Sondenspannung mit einem Pegel angelegt wird, bei dem sich die Ausrichtung eines Flüssigkristallmoleküls nicht ändert, um eine Hauptachsen-Dielektrizitätskonstante $\varepsilon_3$ in der Richtung einer Hauptachse der Flüssigkristallmoleküle des ferroelektrischen Flüssigkristalls (7) zu erhalten, eine HauptachsenDielektrizitätskonstante $\varepsilon_2$ in der Richtung spontaner Polarisation der Flüssigkristallmoleküle zu erhalten und eine Hauptachsen-Dielektrizitätskonstante $\varepsilon_1$ in der Richtung rechtwinklig zu den Richtungen der Hauptachse und der spontanen Polarisation auf Grundlage der Dielektrizitätskonstante zu erhalten;
   und dass das Verfahren ferner die folgenden Schritte aufweist:

   - Anlegen der Sondenspannung an die Elektroden (2a, 2b) der homöotropen Zelle, um eine Dielektrizitätskonstante εh des ferroelektrischen Flüssigkristalls (7) zu messen;

- Anlegen der Sondenspannung an die Elektroden (2a, 2b) der planaren homogenen Zelle, um eine Dielektrizitätskonstante εp des ferroelektrischen Flüssigkristalls (7) zu messen;
- Anlegen der Sondenspannung an die Elektroden (2a, 2b) der planaren homogenen Zelle, um eine Dielektrizitätskonstante $\varepsilon p_{DC}$ des ferroelektrischen Flüssigkristalls zu messen, wobei eine vorbelastende Gleichspannung oder eine vorbelastende niederfrequente spannung an die Elektroden (2a, 2b) der planaren homogenen Zelle angelegt wird, um dadurch die spontane Polarisation der Flüssigkristallmoleküle in eine spezifizierte Richtung in der smektischen Schicht auszurichten; und
- Erhalten der Hauptachsen-Dielektrizitätskonstanten $\varepsilon_1$, $\varepsilon_2$ und $\varepsilon_3$ auf Grundlage der drei Dielektrizitätskonstanten εh, εp und $\varepsilon p_{DC}$ entsprechend einem spezifizierten Beziehungsausdruck.

2. Verfahren zum Messen von Dielektrizitätskonstanten eines ferroelektrischen Flüssigkristalls nach Anspruch 1, bei dem unter der Annahme, dass die dielektrische Anisotropie $\Delta\varepsilon$ und die biaxiale dielektrische Anisotropie $\partial\varepsilon$ des ferroelektrischen Flüssigkristalls jeweils durch die folgenden Gleichungen ausgedrückt sind:

$$\Delta\varepsilon = \varepsilon_3 - \varepsilon_1 \tag{1}$$

und

$$\partial\varepsilon = \varepsilon_2 - \varepsilon_1 \tag{2}$$

und unter der Annahme, dass θ, δ und Φ einen Verkippungswinkel der Flüssigkristallmoleküle, einen Neigungswinkel der smektischen Schicht in Bezug auf die Substrate (1a, 1b) bzw. einen Azimutwinkel der Flüssigkristallmoleküle repräsentieren, der spezifizierte Beziehungsausdruck durch die folgenden gleichzeitig gültigen Gleichungen wiedergegeben ist:

$$\varepsilon h = \varepsilon_1 + \Delta\varepsilon\cos^2\theta \tag{3}$$

$$\varepsilon p = d / \int_0^d [1/\varepsilon_{YY}(\Phi)]dY \tag{4}$$

(wobei d als Zellendicke angenommen ist)

$$\varepsilon_{YY}(\Phi) = \varepsilon_1 + \Delta\varepsilon(\sin\theta\cos\delta\sin\Phi - \cos\theta\sin\delta)^2$$
$$+ \varepsilon\cos^2\delta\cos^2\Phi \tag{5}$$

und

$$\varepsilon p_{DC} = \varepsilon_1 + \Delta\varepsilon(\sin\theta\cos\delta\sin\Phi_{DC} - \cos\theta\sin\delta)^2$$
$$+ \varepsilon\cos^2\delta\cos^2\Phi_{DC} \tag{6}$$

(wobei $\Phi_{DC}$ als konstant angenommen ist).

3. Verfahren zum Messen von Dielektrizitätskonstanten eines ferroelektrischen Flüssigkristalls nach Anspruch 2, bei dem der Mittelwert $\Phi_0$ des Azimutwinkels der Flüssigkristallmoleküle zum Zeitpunkt, zu dem keine Spannung an die Elektroden (2a, 2b) der planaren homogenen Zelle angelegt ist, als Φ in der Gleichung (5) verwendet wird.

4. Verfahren zum Messen von Dielektrizitätskonstanten eines ferroelektrischen Flüssigkristalls, das die folgenden Schritte umfasst:

- Herstellen einer homöotropen Zelle, in der eine aus dem ferroelektrischen Flüssigkristall bestehend smektische Schicht parallel zu den Substraten (1a, 1b) angeordnet ist, und einer planaren homogenen Zelle mit einer abgewinkelten Schichtstruktur, bei der die aus dem ferroelektrischen Flüssigkristall (7) bestehende smektische Schicht in ihren mittleren Teilen in Bezug auf die Substrate (1a, 1b) umgebogen ist;

**dadurch gekennzeichnet, dass,** während der ferroelektrische Flüssigkristall (7) abgedichtet in den Zwischenraum zwischen einem Paar Substrate (1a, 1b), die einander gegenüberstehend angeordnet sind und mit Elektroden (2a, 2b) auf einander zugewandten Flächen der Substrate (1a, 1b) versehen sind, eingefüllt ist, eine Dielektrizitätskonstante dadurch gemessen wird, dass an die Elektroden eine hochfrequente Sondenspannung mit einem Pegel angelegt wird, bei dem sich die Ausrichtung eines Flüssigkristallmoleküls nicht ändert, um eine Hauptachsen-Dielektrizitätskonstante $\varepsilon_3$ in der Richtung einer Hauptachse der Flüssigkristallmoleküle des ferroelektrischen Flüssigkristalls (7) zu erhalten, eine Hauptachsen-Dielektrizitätskonstante $\varepsilon_2$ in der Richtung spontaner Polarisation der Flüssigkristallmoleküle zu erhalten und eine Hauptachsen-Dielektrizitätskonstante $\varepsilon_1$ in der Richtung rechtwinklig zu den Richtungen der Hauptachse und der spontanen Polarisation auf Grundlage der Dielektrizitätskonstanten zu erhalten;
und dass das Verfahren ferner die folgenden Schritte aufweist:

- Anlegen der Sondenspannung an die Elektroden (2a, 2b) der homöotropen Zelle, um eine Dielektrizitätskonstante $\varepsilon h$ des ferroelektrischen Flüssigkristalls (7) zu messen;
- Anlegen der Sondenspannung an die Elektroden (2a, 2b) der planaren homogenen Zelle, um eine Dielektrizitätskonstante $\varepsilon p$ des ferroelektrischen Flüssigkristalls (7) zu messen;
- Anlegen der Sondenspannung an die Elektroden (2a, 2b) der planaren homogenen Zelle, um, dadurch die Hauptachsen-Dielektrizitätskonstante $\varepsilon_2$ des ferroelektrischen Flüssigkristalls (7) unmittelbar zu messen, wobei eine vorbelastende Gleichspannung oder eine vorbelastende niederfrequente Spannung an die Elektroden (2a, 2b) der planaren homogenen Zelle angelegt wird, um dadurch die smektische Schicht rechtwinklig zu den Substraten (1a, 1b) auszurichten und die spontane Polarisation der Flüssigkristallmoleküle in der smektischen Schicht in einer Richtung rechtwinklig zu den Substraten (1a, 1b) auszurichten; und
- ferner Erhalten der Hauptachsen-Dielektrizitätskonstanten $\varepsilon_1$ und $\varepsilon_3$ auf Grundlage der drei Dielektrizitätskonstanten $\varepsilon h$, $\varepsilon p$ und $\varepsilon_2$ entsprechend einem spezifizierten Beziehungsausdruck.

**5.** Verfahren zum Messen von Dielektrizitätskonstanten eines ferroelektrischen Flüssigkristalls nach Anspruch 4, bei dem unter der Annahme, dass die dielektrische Anisotropie $\Delta\varepsilon$ und die biaxiale dielektrische Anisotropie $\partial\varepsilon$ des ferroelektrischen Flüssigkristalls jeweils durch die folgenden Gleichungen ausgedrückt sind:

$$\Delta\varepsilon = \varepsilon_3 - \varepsilon_1 \tag{1}$$

und

$$\partial\varepsilon = \varepsilon_2 - \varepsilon_1 \tag{2}$$

und unter der Annahme, dass $\theta$, $\delta$ und $\Phi$ einen Verkippungswinkel der Flüssigkristallimoleküle, einen Neigungswinkel der smektischen Schicht in Bezug auf die Substrate (1a, 1b) bzw. einen Azimutwinkel der Flüssigkristallmoleküle repräsentieren, der spezifizierte Beziehungsausdruck durch die folgenden gleichzeitig gültigen Gleichungen wiedergegeben ist:

$$\varepsilon h = \varepsilon_1 + \Delta\varepsilon \cos^2\theta \tag{3}$$

$$\varepsilon p = d/ \int_0^d [1/\varepsilon_{YY}(\Phi)]\,dY \tag{4}$$

und

(wobei d als Zellendicke angenommen ist)

$$\varepsilon_{YY}(\Phi) = \varepsilon_1 + \Delta\varepsilon(\sin\theta\cos\delta\sin\Phi - \cos\theta\sin\delta)^2$$

$$+ \varepsilon\cos^2\delta\cos^2\Phi \tag{5}.$$

**6.** Vorrichtung zum Messen von Dielektrizitätskonstanten eines ferroelektrischen Flüssigkristalls, mit:

- einer Einrichtung zum Anlegen einer Sondenspannung an die Elektroden (2a, 2b) der homöotropen Zelle, um eine Dielektrizitätskonstante $\varepsilon h$ des ferroelektrischen Flüssigkristalls (7) zu messen;
- einer Einrichtung zum Anlegen einer Sondenspannung an die Elektroden (2a, 2b) der planaren homogenen Zelle, um eine Dielektrizitätskonstante $\varepsilon p$ des ferroelektrischen Flüssigkristalls (7) zu messen;
- einer Einrichtung zum Anlegen einer Sondenspannung an die Elektroden (2a, 2b) der planaren homogenen Zelle, um eine Dielektrizitätskonstante $\varepsilon p_{DC}$ des ferroelektrischen Flüssigkristalls zu messen, wobei eine vorbelastende Gleichspannung oder eine vorbelastende niederfrequente Spannung an die Elektroden (2a, 2b) der planaren homogenen Zelle angelegt wird, um dadurch die spontane Polarisation der Flüssigkristallmoleküle in eine spezifizierte Richtung in der smektischen Schicht auszurichten; und
- einer Verarbeitungseinrichtung (25) zum Erhalten der Hauptachsen-Dielektrizitätskonstanten $\varepsilon_1$, $\varepsilon_2$ und $\varepsilon_3$ auf Grundlage der drei Dielektrizitätskonstanten $\varepsilon h$, $\varepsilon p$ und $\varepsilon p_{DC}$ entsprechend einem spezifizierten Beziehungsausdruck.

**7.** Vorrichtung zum Messen von Dielektrizitätskonstanten eines ferroelektrischen Flüssigkristalls, mit:

- einer homöotropen Zelle, in der eine aus dem ferroelektrischen Flüssigkristall bestehend smektische Schicht parallel zu den Substraten (1a, 1b) angeordnet ist, einer planaren homogenen Zelle mit einer abgewinkelten Schichtstruktur, bei der die aus dem ferroelektrischen Flüssigkristall (7) bestehende smektische Schicht in ihren mittleren Teilen in Bezug auf die Substrate (1a, 1b) umgebogen ist:
- eine Einrichtung zum Anlegen einer Sondenspannung an die Elektroden (2a, 2b) der homöotropen Zelle, um eine Dielektrizitätskonstante $\varepsilon h$ des ferroelektrischen Flüssigkristalls (7) zu messen;
- eine Einrichtung zum Anlegen einer Sondenspannung an die Elektroden (2a, 2b) der planaren homogenen Zelle, um eine Dielektrizitätskonstante $\varepsilon p$ des ferroelektrischen Flüssigkristalls (7) zu messen;
- eine Einrichtung zum Anlegen einer Sondenspannung an die Elektroden (2a, 2b) der planaren homogenen Zelle, um dadurch die Hauptachsen-Dielektrizitätskonstante $\varepsilon_2$ des ferroelektrischen Flüssigkristalls (7) unmittelbar zu messen, wobei eine vorbelastende Gleichspannung oder eine vorbelastende niederfrequente Spannung an die Elektroden (2a, 2b) der planaren homogenen Zelle angelegt wird, um dadurch die smektische Schicht rechtwinklig zu den Substraten (1a, 1b) auszurichten und die spontane Polarisation der Flüssigkristallmoleküle in der smektischen Schicht in einer Richtung rechtwinklig zu den Substraten (1a, 1b) auszurichten; und
- einer Verarbeitungseinrichtung (25) zum ferneren Erhalten der Hauptachsen-Dielektrizitätskonstanten $\varepsilon_1$ und $\varepsilon_3$ auf Grundlage der drei Dielektrizitätskonstanten $\varepsilon h$, $\varepsilon p$ und $\varepsilon_2$ entsprechend einem spezifizierten Beziehungsausdruck.

**8.** Vorrichtung nach Anspruch 6, bei der unter der Annahme, dass die dielektrische Anisotropie $\Delta\varepsilon$ und die biaxiale dielektrische Anisotropie $\partial\varepsilon$ des ferroelektrischen Flüssigkristalls jeweils durch die folgenden Gleichungen ausgedrückt sind:

$$\Delta\varepsilon = \varepsilon_3 - \varepsilon_1 \tag{1}$$

und

$$\partial\varepsilon = \varepsilon_2 - \varepsilon_1 \tag{2}$$

und unter der Annahme, dass $\theta$, $\delta$ und $\Phi$ einen Verkippungswinkel der Flüssigkristallmoleküle, einen Neigungswinkel der smektischen Schicht in Bezug auf die Substrate (1a, 1b) bzw. einen Azimutwinkel der Flüssigkristallmoleküle repräsentieren, der spezifizierte Beziehungsausdruck durch die folgenden gleichzeitig gültigen Gleichungen wiedergegeben ist:

$$\varepsilon h = \varepsilon_1 + \Delta\varepsilon\cos^2\theta \tag{3}$$

$$\varepsilon p = d/ \int_0^d [1/\varepsilon_{YY}(\Phi)]dY \tag{4}$$

(wobei d als Zellendicke angenommen ist)

$$\varepsilon_{YY}(\Phi) = \varepsilon_1 + \Delta\varepsilon(\sin\theta\cos\delta\sin\Phi - \cos\theta\sin\delta)^2$$

$$+ \varepsilon\cos^2\delta\cos^2\Phi \tag{5}$$

und

$$\varepsilon p_{DC} = \varepsilon_1 + \Delta\varepsilon(\sin\theta\cos\delta\sin\Phi_{DC} - \cos\theta\sin\delta)^2$$

$$+ \varepsilon\cos^2\delta\cos^2\Phi_{DC} \tag{6}$$

(wobei $\Phi_{DC}$ als konstant angenommen ist),
die Verarbeitungseinrichtung (25) so ausgebildet ist, dass sie eine numerische Berechnung ausführt, um die drei Hauptachsen-Dielektrizitätskonstanten $\varepsilon_1$, $\varepsilon_2$ und $\varepsilon_3$ dadurch zu erhalten, dass sie gleichzeitig gültige Gleichungen, nämlich die Gleichungen (3), (4), (5) und (6) auf Grundlage der drei Werte von $\varepsilon h$, $\varepsilon p$ und $\varepsilon p_{DC}$ aufstellt.

**9.** Vorrichtung nach Anspruch 7, bei der unter der Annahme, dass die dielektrische Anisotropie $\Delta\varepsilon$ und die biaxiale dielektrische Anisotropie $\partial\varepsilon$ des ferroelektrischen Flüssigkristalls jeweils durch die folgenden Gleichungen ausgedrückt sind:

$$\Delta\varepsilon = \varepsilon_3 - \varepsilon_1 \tag{1}$$

und

$$\partial\varepsilon = \varepsilon_2 - \varepsilon_1 \tag{2}$$

und unter der Annahme, dass $\theta$, $\delta$ und $\Phi$ einen Verkippungswinkel der Flüssigkristallmoleküle, einen Neigungswinkel der smektischen Schicht in Bezug auf die Substrate (1a, 1b) bzw. einen Azimutwinkel der Flüssigkristallmoleküle repräsentieren, der spezifizierte Beziehungsausdruck durch die folgenden gleichzeitig gültigen Gleichungen wiedergegeben ist:

$$\varepsilon h = \varepsilon_1 + \Delta\varepsilon\cos^2\theta \tag{3}$$

$$\varepsilon p = d/ \int_0^d [1/\varepsilon_{YY}(\Phi)]dY \tag{4}$$

(wobei d als Zellendicke angenommen ist)

$$\varepsilon_{YY}(\Phi) = \varepsilon_1 + \Delta\varepsilon(\sin\theta\cos\delta\sin\Phi - \cos\theta\sin\delta)^2$$

$$+ \varepsilon\cos^2\delta\cos^2\Phi \tag{5},$$

die Verarbeitungseinrichtung (25) so ausgebildet ist, dass sie eine numerische Berechnung ausführt, um die Hauptachsen-Dielektrizitätskonstanten $\varepsilon_1$ und $\varepsilon_3$ dadurch zu erhalten, dass sie gleichzeitig gültige Gleichungen, nämlich die Gleichungen (3), (4) und (5) auf Grundlage der drei Werte von $\varepsilon h$, $\varepsilon p$ und $\varepsilon_2$ aufstellt.

## Revendications

1. Procédé de mesure de permittivités d'un cristal liquide ferro-électrique, le procédé comprenant l'étape de:

   préparation d'une cellule homéotropique dans laquelle une couche smectique constituée par le cristal liquide ferro-électrique est agencée en parallèle aux substrats (1a, 1b) et d'une cellule homogène planaire présentant une structure en couches à chevrons dans laquelle la couche smectique constituée par le cristal liquide ferro-électrique est incurvée dans ses parties de milieu par rapport aux substrats (1a, 1b),

   caractérisé en ce que, tandis qu'un cristal liquide ferro-électrique (7) est rempli de façon étanche dans un espace entre une paire de substrats (1a, 1b) qui sont agencés de manière à se faire face l'un l'autre et qui sont munis d'électrodes (2a, 2b) sur des surfaces des substrats (1a, 1b) se faisant face, une permittivité est mesurée en appliquant entre les électrodes une tension de sonde haute fréquence présentant un niveau auquel une orientation d'une molécule de cristal liquide ne se modifie pas pour obtenir une permittivité d'axe principal $\varepsilon_3$ suivant une direction d'un axe principal des molécules de cristal liquide du cristal liquide ferro-électrique (7), une permittivité d'axe principal $\varepsilon_2$ suivant une direction de polarisation spontanée des molécules de cristal liquide et une permittivité d'axe principal $\varepsilon_1$ suivant une direction perpendiculaire aux directions de l'axe principal et de la polarisation spontanée sur la base de la permittivité; et en ce que le procédé comprend en outre les étapes de:

   application de la tension de sonde entre les électrodes (2a, 2b) de la cellule homéotropique afin de mesurer une permittivité $\varepsilon h$ du cristal liquide ferro-électrique (7);
   application de la tension de sonde entre les électrodes (2a, 2b) de la cellule homogène planaire afin de mesurer une permittivité $\varepsilon p$ du cristal liquide ferro-électrique (7);
   application de la tension de sonde entre les électrodes (2a, 2b) de la cellule homogène planaire afin de mesurer une permittivité $\varepsilon p_{DC}$ du cristal liquide ferro-électrique tandis qu'une tension de polarisation continue ou qu'une tension de polarisation basse fréquence est appliquée entre les électrodes (2a, 2b) de la cellule homogène planaire afin d'ainsi aligner la polarisation spontanée des molécules de cristal liquide suivant une direction spécifiée dans la couche smectique; et
   obtention des permittivités d'axe principal $\varepsilon_1$, $\varepsilon_2$ et $\varepsilon_3$ sur la base des trois permittivités $\varepsilon h$, $\varepsilon p$ et $\varepsilon p_{DC}$ conformément à une expression relationnelle spécifiée.

2. Procédé de mesure de permittivités d'un cristal liquide ferro-électrique selon la revendication 1, dans lequel, si l'on suppose qu'une anisotropie diélectrique $\Delta\varepsilon$ et qu'une anisotropie diélectrique biaxiale $\partial\varepsilon$ du cristal liquide ferro-électrique sont exprimées respectivement par les équations qui suivent:

$$\Delta\varepsilon = \varepsilon_3 - \varepsilon_1 \tag{1},$$

   et

$$\partial\varepsilon = \varepsilon_2 - \varepsilon_1 \tag{2}$$

   et si l'on suppose que $\theta$, $\delta$ et $\phi$ représentent respectivement un angle d'inclinaison des molécules de cristal liquide, un angle d'inclinaison de la couche smectique par rapport aux substrats (1a, 1b) et un azimut des molécules de cristal liquide, l'expression relationnelle spécifiée est exprimée au moyen des équations simultanées qui suivent:

$$\varepsilon h = \varepsilon_1 + \Delta\varepsilon \cos^2\theta \qquad (3)$$

$$\varepsilon p = d / \int_0^d \left[ 1 / \varepsilon_{yy}(\phi) \right] dY \qquad (4)$$

(étant entendu que d est une épaisseur de cellule)

$$\varepsilon_{yy}(\phi) = \varepsilon_1 + \Delta\varepsilon (\sin\theta\cos\delta\sin\phi - \cos\theta\sin\delta)^2$$
$$+ \partial\varepsilon \cos^2\delta\cos^2\phi \qquad (5)$$

et

$$\varepsilon p_{DC} = \varepsilon_1 + \Delta\varepsilon (\sin\theta\cos\delta\sin\phi_{DC} - \cos\theta\sin\delta)^2$$
$$+ \partial\varepsilon \cos^2\delta\cos^2\phi_{DC} \qquad (6)$$

(étant entendu que $\phi_{DC}$ est une constante).

3. Procédé de mesure de permittivités d'un cristal liquide ferro-électrique selon la revendication 2, dans lequel:

une valeur moyenne $\phi_0$ de l'azimut des molécules de cristal liquide pendant une durée pendant laquelle aucune tension de polarisation n'est appliquée entre les électrodes (2a, 2b) de la cellule homogène planaire est utilisée en tant que $\phi$ dans l'équation (5).

4. Procédé de mesure de permittivités d'un cristal liquide ferro-électrique, le procédé comprenant l'étape de:

préparation d'une cellule homéotropique dans laquelle une couche smectique constituée par le cristal liquide ferro-électrique est agencée en parallèle aux substrats (1a, 1b) et d'une cellule homogène planaire présentant une structure en couches à chevrons dans laquelle la couche smectique constituée par le cristal liquide ferro-électrique (7) est incurvée dans ses parties de milieu par rapport aux substrats (1a, 1b),

caractérisé en ce que, tandis qu'un cristal liquide ferro-électrique (7) est rempli de façon étanche dans un espace entre une paire de substrats (1a, 1b) qui sont agencés de manière à se faire face l'un l'autre et qui sont munis d'électrodes (2a, 2b) sur des surfaces des substrats se faisant face, une permittivité est mesurée en appliquant entre les électrodes (2a, 2b) une tension de sonde haute fréquence présentant un niveau auquel une orientation d'une molécule de cristal liquide ne se modifie pas pour obtenir une permittivité d'axe principal $\varepsilon_3$ suivant une direction d'un axe principal des molécules de cristal liquide du cristal liquide ferro-électrique (7), une permittivité d'axe principal $\varepsilon_2$ suivant une direction de polarisation spontanée des molécules de cristal liquide et une permittivité d'axe principal $\varepsilon_1$ suivant une direction perpendiculaire aux directions de l'axe principal et de la polarisation spontanée sur la base de la permittivité; et en ce que le procédé comprend en outre les étapes de:

application de la tension de sonde entre les électrodes (2a, 2b) de la cellule homéotropique afin de mesurer une permittivité $\varepsilon h$ du cristal liquide ferro-électrique (7);
application de la tension de sonde entre les électrodes (2a, 2b) de la cellule homogène planaire afin de mesurer une permittivité $\varepsilon p$ du cristal liquide ferro-électrique (7);
application de la tension de sonde entre les électrodes (2a, 2b) de la cellule homogène planaire afin de mesurer directement la permittivité d'axe principal $\varepsilon_2$ du cristal liquide ferro-électrique (7) tandis qu'une tension de polarisation continue ou qu'une tension de polarisation basse fréquence est appliquée entre les électrodes de la cellule homogène planaire afin d'ainsi aligner la couche smectique perpendiculairement aux substrats (1a, 1b) et afin d'ainsi aligner la polarisation spontanée des molécules de cristal liquide dans la couche smectique suivant une direction perpendiculaire aux substrats (1a, 1b); et
obtention en outre des permittivités d'axe principal $\varepsilon_1$ et $\varepsilon_3$ sur la base des trois permittivités $\varepsilon h$, $\varepsilon p$ et $\varepsilon_2$

conformément à une expression relationnelle spécifiée.

5. Procédé de mesure de permittivités d'un cristal liquide ferro-électrique selon la revendication 4, dans lequel, si l'on suppose qu'une anisotropie diélectrique $\Delta\varepsilon$ et qu'une anisotropie diélectrique biaxiale $\partial\varepsilon$ du cristal liquide ferro-électrique sont exprimées respectivement par les équations qui suivent:

$$\Delta\varepsilon = \varepsilon_3 - \varepsilon_1 \qquad (1),$$

et

$$\partial\varepsilon = \varepsilon_2 - \varepsilon_1 \qquad (2)$$

et si l'on suppose que $\theta$, $\delta$ et $\phi$ représentent respectivement un angle d'inclinaison des molécules de cristal liquide, un angle d'inclinaison de la couche smectique par rapport aux substrats et un azimut des molécules de cristal liquide, l'expression relationnelle spécifiée est exprimée au moyen des équations simultanées qui suivent:

$$\varepsilon h = \varepsilon_1 + \Delta\varepsilon \cos^2\theta \qquad (3)$$

$$\varepsilon p = d / \int_0^d \left[ 1 / \varepsilon_{yy}(\phi) \right] dY \qquad (4),$$

et

(étant entendu que d est une épaisseur de cellule)

$$\varepsilon_{yy}(\phi) = \varepsilon_1 + \Delta\varepsilon \, (\sin\theta\cos\delta\sin\phi - \cos\theta\sin\delta)^2$$

$$+ \, \partial\varepsilon \cos^2\delta\cos^2\phi \qquad (5).$$

6. Appareil pour mesurer des permittivités d'un cristal liquide ferro-électrique comprenant:

une cellule homéotropique dans laquelle une couche smectique constituée par le cristal liquide ferro-électrique est agencée en parallèle à des substrats (1a, 1b); une cellule homogène planaire présentant une structure en couches à chevrons dans laquelle la couche smectique constituée par le cristal liquide ferro-électrique est incurvée dans ses parties de milieu par rapport aux substrats (1a, 1b);
des moyens pour appliquer une tension de sonde entre des électrodes (2a, 2b) de la cellule homéotropique afin de mesurer une permittivité $\varepsilon h$ du cristal liquide ferro-électrique (7);
des moyens pour appliquer une tension de sonde entre des électrodes (2a, 2b) de la cellule homogène planaire afin de mesurer une permittivité $\varepsilon p$ du cristal liquide ferro-électrique (7);
des moyens pour appliquer une tension de sonde entre les électrodes (2a, 2b) de la cellule homogène planaire afin de mesurer une permittivité $\varepsilon p_{DC}$ du cristal liquide ferro-électrique tandis qu'une tension de polarisation continue ou qu'une tension de polarisation basse fréquence est appliquée entre les électrodes (2a, 2b) de la cellule homogène planaire afin d'ainsi aligner la polarisation spontanée des molécules de cristal liquide suivant une direction spécifiée dans la couche smectique; et
des moyens de traitement (25) pour obtenir les permittivités d'axe principal $\varepsilon_1$, $\varepsilon_2$ et $\varepsilon_3$ sur la base des trois permittivités $\varepsilon h$, $\varepsilon p$ et $\varepsilon p_{DC}$ conformément à une expression relationnelle spécifiée.

7. Appareil pour mesurer des permittivités d'un cristal liquide ferro-électrique comprenant:

une cellule homéotropique dans laquelle une couche smectique constituée par le cristal liquide ferro-électrique est agencée en parallèle à des substrats (1a, 1b); une cellule homogène planaire présentant une structure en couches à chevrons dans laquelle la couche smectique constituée par le cristal liquide ferro-électrique (7) est incurvée dans ses parties de milieu par rapport aux substrats (1a, 1b);

des moyens pour appliquer une tension de sonde entre des d'électrodes (2a, 2b) de la cellule homéotropique afin de mesurer une permittivité εh du cristal liquide ferro-électrique (7);

des moyens pour appliquer une tension de sonde entre des électrodes (2a, 2b) de la cellule homogène planaire afin de mesurer une permittivité εp du cristal liquide ferro-électrique (7);

des moyens pour appliquer une tension de sonde entre les électrodes (2a, 2b) de la cellule homogène planaire afin de mesurer directement la permittivité d'axe principal $\varepsilon_2$ du cristal liquide ferro-électrique (7) tandis qu'une tension de polarisation continue ou qu'une tension de polarisation basse fréquence est appliquée entre les électrodes de la cellule homogène planaire afin d'ainsi aligner la couche smectique perpendiculairement aux substrats (1a, 1b) et afin d'ainsi aligner la polarisation spontanée des molécules de cristal liquide dans la couche smectique suivant une direction perpendiculaire aux substrats (1a, 1b); et

des moyens de traitement (25) pour obtenir en outre les permittivités d'axe principal $\varepsilon_1$ et $\varepsilon_3$ sur la base des trois permittivités εh, εp et $\varepsilon_2$ conformément à une expression relationnelle spécifiée.

8. Appareil selon la revendication 6, dans lequel, si l'on suppose qu'une anisotropie diélectrique $\Delta\varepsilon$ et qu'une anisotropie diélectrique biaxiale $\partial\varepsilon$ du cristal liquide ferro-électrique (7) sont exprimées respectivement par les équations qui suivent:

$$\Delta\varepsilon = \varepsilon_3 - \varepsilon_1 \qquad (1),$$

et

$$\partial\varepsilon = \varepsilon_2 - \varepsilon_1 \qquad (2)$$

et si l'on suppose que θ, δ et φ représentent respectivement un angle d'inclinaison des molécules de cristal liquide, un angle d'inclinaison de la couche smectique par rapport aux substrats et un azimut des molécules de cristal liquide, l'expression relationnelle spécifiée est exprimée au moyen des équations simultanées qui suivent:

$$\varepsilon h = \varepsilon_1 + \Delta\varepsilon \cos^2\theta \qquad (3)$$

$$\varepsilon p = d \ / \int_0^d \left[ 1 / \varepsilon_{yy}(\phi) \right] dY \qquad (4)$$

(étant entendu que d est une épaisseur de cellule)

$$\varepsilon_{yy}(\phi) = \varepsilon_1 + \Delta\varepsilon (\sin\theta\cos\delta\sin\phi - \cos\theta\sin\delta)^2$$
$$+ \partial\varepsilon \cos^2\delta\cos^2\phi \qquad (5),$$

et

$$\varepsilon p_{DC} = \varepsilon_1 + \Delta\varepsilon (\sin\theta\cos\delta\sin\phi_{DC} - \cos\theta\sin\delta)^2$$
$$+ \partial\varepsilon \cos^2\delta\cos^2\phi_{DC} \qquad (6)$$

(étant entendu que $\phi_{DC}$ est une constante);

les moyens de traitement (25) sont adaptés pour exécuter un calcul numérique pour obtenir les trois permittivités d'axe principal $\varepsilon_1$, $\varepsilon_2$ et $\varepsilon_3$ en résolvant des équations simultanées constituées par les équations (3), (4), (5) et (6) sur la base des trois valeurs de εh, εp et $\varepsilon p_{DC}$.

9. Appareil selon la revendication 7, dans lequel, si l'on suppose qu'une anisotropie diélectrique $\Delta\varepsilon$ et qu'une anisotropie diélectrique biaxiale $\partial\varepsilon$ du cristal liquide ferro-électrique (7) sont exprimées respectivement par les équations

qui suivent:

$$\Delta\varepsilon = \varepsilon_3 - \varepsilon_1 \qquad\qquad\qquad (1),$$

et

$$\partial\varepsilon = \varepsilon_2 - \varepsilon_1 \qquad\qquad\qquad (2)$$

et si l'on suppose que $\theta$, $\delta$ et $\phi$ représentent respectivement un angle d'inclinaison des molécules de cristal liquide, un angle d'inclinaison de la couche smectique par rapport aux substrats (1a, 1b) et un azimut des molécules de cristal liquide, l'expression relationnelle spécifiée est exprimée au moyen des équations simultanées qui suivent:

$$\varepsilon h = \varepsilon_1 + \Delta\varepsilon \cos^2\theta \qquad\qquad\qquad (3)$$

$$\varepsilon p = d / \int_0^d \left[1 / \varepsilon_{yy}(\phi)\right] dY \qquad (4),$$

et

(étant entendu que d est une épaisseur de cellule)

$$\varepsilon_{yy}(\phi) = \varepsilon_1 + \Delta\varepsilon (\sin\theta\cos\delta\sin\phi - \cos\theta\sin\delta)^2$$

$$+ \partial\varepsilon \cos^2\delta\cos^2\phi \qquad\qquad\qquad (5);$$

les moyens de traitement (25) sont adaptés pour exécuter un calcul numérique pour obtenir les permittivités d'axe principal $\varepsilon_1$ et $\varepsilon_3$ en résolvant des équations simultanées constituées par les équations (3), (4) et (5) sur la base des trois valeurs de $\varepsilon h$, $\varepsilon p$ et $\varepsilon_2$.

Fig. 1

Fig. 2

Fig. 3

## *Fig. 4*

Square wave
at 1Hz

Apparent tilt angle [deg.]

Voltage [V]

31

Fig. 5

Fig. 6

27

24 TV monitor

23 CCD camera

28

Polarizing microscope
26

26a

26b

21

30

29

Computer

25

26c

11

26d

22 LCR meter

33

EP 0 625 711 B1

Fig. 7     PRIOR ART

Fig. 8

Fig. 9

*Fig. 10A*

Rubbing direction

Hairpin-shaped defect

C1    C2

Lightning defect

*Fig. 10B*

13    13    4a

16

$\Theta_p$

13    13    17    4b

*Fig. 11A*

U

*Fig. 11B*

T

Fig. 12

*Fig. 13*